(19) 

**Europäisches Patentamt**
**European Patent Office**
**Office européen des brevets**

(11) **EP 4 714 626 A1**

(12) **EUROPEAN PATENT APPLICATION**
published in accordance with Art. 153(4) EPC

(43) Date of publication:
**25.03.2026 Bulletin 2026/13**

(21) Application number: **24806916.3**

(22) Date of filing: **11.04.2024**

(51) International Patent Classification (IPC):
**B29B 9/08** (2006.01)          **B29B 9/12** (2006.01)
**C08J 3/12** (2006.01)

(52) Cooperative Patent Classification (CPC):
**B29B 9/08; B29B 9/12; C08J 3/12**

(86) International application number:
**PCT/JP2024/014622**

(87) International publication number:
**WO 2024/236962 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.05.2023   JP 2023080938**
**05.10.2023   JP 2023173896**

(71) Applicants:
• **Nagase & Co., Ltd.**
**Osaka 550-8668 (JP)**

• **Nagase Plastics Co., Ltd.**
**Osaka-shi, Osaka 550-8668 (JP)**

(72) Inventors:
• **MIYAMOTO, Akira**
**Osaka-shi, Osaka 551-0013 (JP)**
• **KITANI, Makoto**
**Osaka-shi, Osaka 551-0013 (JP)**
• **MORI, Toyoichiro**
**Osaka-shi, Osaka 551-0013 (JP)**

(74) Representative: **Altmann Stößel Dick
Patentanwälte PartG mbB
Isartorplatz 1
80331 München (DE)**

(54) **GRANULE OF THERMOPLASTIC RESIN POWDER, POWDER GRANULE OF CRYSTALLINE POLYMER, AND PRODUCTION METHOD THEREFOR**

(57)     An object of the present disclosure is to provide a thermoplastic resin powder granulate which, without subjecting the thermoplastic resin powder to melt-kneading pelletization, has a stable shape and high bulk density, improves the working environment, and has excellent feedability (stability and flowability) to processing machines, and which can contribute to a reduction in the amount of electricity used for production, and thus in the amount of carbon dioxide generated, compared with melt-kneading pelletization. A powder granulate containing thermoplastic resin powder according to an embodiment comprises an outer wall portion in which at least part of the thermoplastic resin powder located in the outermost region of the powder granulate is fused, and which accommodates compacted thermoplastic resin powder.

Fig. 2

**Description**

Technical Field

The present disclosure relates to a granulate of thermoplastic resin powder. The present disclosure also relates to a powder granulate of crystalline polymer powder and a method for producing the same.

Background Art

Some thermoplastic resins may be in powder form due to the production method, or because they are recycled and/or ground products. In general, such thermoplastic resin powder is difficult to handle. In order to improve ease of handling and further enhance productivity, such powder is generally plasticized and melted in a melt extruder, extruded through a die, cooled to solidify, thereby forming pellets (hereinafter, also referred to as "melt-kneaded pellets"), which are then supplied to various thermoplastic resin processing machines for product fabrication. In other words, thermoplastic resin in powder form is typically converted into melt-kneaded pellets.

Meanwhile, some crystalline thermoplastic polymers (hereinafter, also referred to as "crystalline polymers") may be in powder form due to the production method, or because they are recycled and/or ground products. In general, such thermoplastic resin powder is difficult to handle. In order to improve ease of handling and further enhance productivity, such powder is generally plasticized and melted in a melt extruder, extruded through a die, cooled to solidify, thereby forming pellets (hereinafter, also referred to as "melt-kneaded pellets"), which are then supplied to various thermoplastic resin processing machines for product fabrication. In other words, thermoplastic resin in powder form is typically converted into melt-kneaded pellets.

In the molding of a crystalline polymer, when the crystalline polymer has a low crystallization rate during cooling to solidify from the plasticized molten state, productivity may be impaired in various molding processes. For example, in injection molding, such a polymer cannot be solidified in a mold in a short period of time, resulting in longer molding cycles. Furthermore, due to insufficient crystallinity in the molded product, physical properties of the molded product, such as rigidity, dimensional stability, and transparency, may become unstable.

For these reasons, a crystal nucleating agent is used for crystalline polymers in some cases. The crystal nucleating agent is an additive that promotes crystallization of crystalline polymers, and it is incorporated by melt kneading.

The crystal nucleating agent preferably exerts the effect of generating homogeneous fine crystal nuclei in a short period of time, thereby providing various property-modifying effects, such as improved rigidity, dimensional stability, and transparency, and a shorter molding cycle.

For example, in bio-based polyester resins, such as polyhydroxyalkanoates (PHAs), that are produced by microorganisms in their bodies, the crystallization rate is generally low. Thus, a crystal nucleating agent may be added.

Patent Literature 1 discloses a resin composition containing polyhydroxyalkanoate (PHA) supplemented with pentaerythritol as a crystal nucleating agent.

Patent Literature 2 discloses a biodegradable polymer composition containing polyhydroxyalkanoate (PHA) supplemented with other biodegradable polymers and a nucleating agent (equivalent to a crystal nucleating agent).

Citation List

Patent Literature

Patent Literature 1: WO 2014/020838
Patent Literature 2: JP 2023-536152 A

Summary of Invention

Technical Problem

Concerning thermoplastic resins, thermoplastic resins in powder form often cause problems during melt-kneading pelletization, such as poor feed into various melt kneading machines, including extruders, and low productivity, due to their low bulk density.

In addition, reduction of carbon dioxide, a greenhouse gas, has recently been set as a goal. In various thermoplastic resin processing, it is a major challenge to reduce the amount of energy used in the process and the amount of carbon dioxide generated.

It is an object of the present disclosure to provide a thermoplastic resin powder granulate which, without undergoing melt-kneading pelletization, has a stable shape and high bulk density, contributes to an improved working environment, and exhibits excellent feeding properties (stability and flowability) to processing machines, and which, compared with melt-kneaded pellets, can contribute to reduction in the amount of electricity used and, hence, to reduction in the amount of carbon dioxide generated during production.

Moreover, in molding of crystalline polymers, the types of crystal nucleating agents that exert sufficient effects are limited. In medical or food applications, i.e., applications in which polymers are brought into contact with organisms or foods, elution of the crystal nucleating agents may occur. Accordingly, it is desirable to minimize the use of crystal nucleating agents for such applications. Therefore, if the crystallization rate during a molding process can be increased without the addition of a crystal nucleating agent, it would be a highly useful industrial technology.

It is an object of the present disclosure to provide a crystalline polymer powder granulate that has excellent crystallization properties in molding processes.

Solution to Problem

The first aspect of the present embodiment is, for example, described as follows.

(1) A powder granulate containing thermoplastic resin powder, wherein the powder granulate comprises an outer wall portion in which at least part of the thermoplastic resin powder located in the outermost region of the powder granulate is fused, and which accommodates compacted thermoplastic resin powder.

(2) The powder granulate according to (1), wherein at least part of the compacted thermoplastic resin powder accommodated in the outer wall portion comprises the thermoplastic resin powder in an unfused compacted powder form.

(3) The powder granulate according to (1) or (2), wherein at least part of the compacted thermoplastic resin powder accommodated in the outer wall portion comprises the thermoplastic resin powder in a partially fused form.

(4) The powder granulate according to any one of (1) to (3), wherein the powder granulate has an approximately columnar or approximately prismatic shape.

(5) The powder granulate according to any one of (1) to (4), wherein the outer wall portion is located on the lateral surface of the powder granulate.

(6) The powder granulate according to any one of (1) to (5), wherein the powder granulate has a breaking strength of 2.0 kg or higher.

(7) The powder granulate according to any one of (1) to (6), wherein the powder granulate is a compaction granulate.

(8) The powder granulate according to any one of (1) to (7), wherein the thermoplastic resin powder contains thermoplastic resin having a softening onset temperature of 50°C to 150°C.

(9) The powder granulate according to any one of (1) to (8), wherein the thermoplastic resin powder contains thermoplastic resin having a softening onset temperature of 60°C to 90°C.

(10) The powder granulate according to any one of (1) to (9), wherein the thermoplastic resin powder contains at least one resin selected from the group consisting of acrylic-based resin, methacrylic-based resin, polyhydroxyalkanoate (PHA)-based resin, polyolefin-based resin, polyamide-based resin, polyacetal-based resin, polyphenylene ether (PPE)-based resin, polyphenylene sulfide (PPS)-based resin, polyetheretherketone (PEEK)-based resin, polyimide (PI)-based resin, polyamide imide (PAI)-based resin, polyester-based resin, polycarbonate (PC)-based resin, polystyrene-based resin, polyketone-based resin, liquid crystal polymer (LCP), and core-shell polymer.

(11) The powder granulate according to any one of (1) to (10), wherein the thermoplastic resin powder contains PHA-based resin.

(12) A method for producing the powder granulate according to any one of (1) to (11) comprising:

a compaction granulation step of granulating thermoplastic resin powder by a compaction granulation method comprising extruding the thermoplastic resin powder through a die hole,
wherein the compaction granulation step is performed under the conditions that the temperature (Tp, °C) of the granulate immediately after granulation and the softening onset temperature (Ts, °C) of the thermoplastic resin powder satisfy Formula (1).

$$\text{Formula (1): } Ts - 30 \leq Tp \leq Ts + 10$$

(13) The method according to (12), wherein the temperature of the die is controlled, so that the temperature (Tp, °C) of the granulate immediately after granulation and the softening onset temperature (Ts, °C) of the thermoplastic resin powder satisfy Formula (1).

(14) The method according to (12) or (13), wherein the outer wall portion is formed by melting at least part of the thermoplastic resin powder at a surface in contact with a wall surface of the die hole, due to frictional heat or heat transfer from the wall surface.

(15) The method according to any one of (12) to (14), wherein the compaction granulation step is performed using a disc pelletizer-type compaction granulator.

(16) Use of the powder granulate according to any one of (1) to (11) as a raw material for thermoplastic resin compounding or a molding material.

The second aspect of the present embodiment is, for example, described as follows.

[1] A powder granulate of crystalline polymer powder, wherein the powder granulate has a first hold temperature $T_{H1}$, defined in a first DSC measurement in which the powder granulate is heated from room temperature to the first hold temperature $T_{H1}$ at a rate of 10°C/min, held at the first hold temperature $T_{H1}$ for 15 minutes, and then cooled at a rate of 10°C/min, and during cooling in the first DSC measurement, an exothermic peak due to recrystallization of the crystalline polymer is observed, and
wherein the first hold temperature $T_{H1}$ is higher than the highest melting peak temperature $T_M$ of the crystalline polymer appearing during heating in the first DSC measurement.

[2] The powder granulate according to [1], wherein the powder granulate has a second hold temperature $T_{H2}$, defined in a second DSC measurement in which the powder granulate is heated from room temperature to the second hold temperature $T_{H2}$ at a rate of 10°C/min, held at the second hold temperature $T_{H2}$ for 15 minutes, and then cooled at a rate of 10°C/min, and during cooling in the second DSC measurement, no exothermic peak due to recrystallization of the crystalline polymer is observed, and
wherein the second hold temperature $T_{H2}$ is higher than the first hold temperature $T_{H1}$.

[3] The powder granulate according to [1] or [2], wherein a peak temperature $Tc_{15}$ of an exothermic peak due to recrystallization observed during cooling in the first DSC measurement, and a peak temperature $Tc_2$ of an exothermic peak due to recrystallization of the crystalline polymer observed during cooling in a third DSC measurement, in which the powder granulate is heated from room temperature to the first hold temperature $T_{H1}$ at a rate of 10°C/min, held at the first hold temperature $T_{H1}$ for 2 minutes, and then cooled at a rate of 10°C/min, satisfy Formula (A):

$$\text{Formula (A): } 0.95 \leq Tc_{15} / Tc_2 \leq 1.05.$$

[4] The powder granulate according to any one of [1] to [3], wherein the powder granulate is substantially free of a crystal nucleating agent.

[5] The powder granulate according to any one of [1] to [4], wherein the powder granulate has a breaking strength of 10.0 kg or higher, as measured using a Kiya hardness tester.

[6] The powder granulate according to any one of [1] to [5], wherein an apparent density ratio calculated in accordance with Formula (B) below is 0.85 or more and 0.95 or less:

apparent density ratio = apparent density of the powder granulate / apparent density of a melt-kneaded pellet of the crystalline polymer.                                    Formula (B):

[7] The powder granulate according to any one of [1] to [6], wherein, when the bulk density of the crystalline polymer powder before granulation is $\rho_1$ and the bulk density of the powder granulate is $\rho_2$, a $\rho_2/\rho_1$ value is 0.90 or more and 3.00 or less.

[8] The powder granulate according to any one of [1] to [7], wherein the crystalline polymer has a weight average molecular weight of 200,000 or more and 3,000,000 or less.

[9] The powder granulate according to any one of [1] to [8], wherein the powder granulate has an approximately columnar or approximately prismatic form.

[10] The powder granulate according to any one of [1] to [9], wherein the powder granulate includes the crystalline polymer powder having a melting peak temperature $T_M$ within a range of 70°C to 200°C.

[11] The powder granulate according to any one of [1] to [10], wherein the crystalline polymer powder includes biodegradable resin.

[12] The powder granulate according to any one of [1] to [11], wherein the biodegradable resin includes aliphatic polyester-based resin or aliphatic-aromatic polyester-based resin.

[13] The powder granulate according to any one of [1] to [12], wherein the biodegradable resin includes aliphatic polyester-based resin.

[14] The powder granulate according to any one of [1] to [13], wherein the aliphatic polyester-based resin includes polyhydroxyalkanoate.

[15] The powder granulate according to any one of [1] to [14], wherein the powder granulate has the first hold temperature $T_{H1}$ of 180°C and the second hold temperature $T_{H2}$ of 200°C.

[16] The powder granulate according to any one of [1] to [15], wherein, in the first DSC measurement in which the powder granulate is heated from room temperature to 180°C at a rate of 10°C/min, held at 180°C for 15 minutes, and then cooled at a rate of 10°C/min, the exothermic peak due to recrystallization of the crystalline polymer is observed during cooling, and

in the second DSC measurement in which the powder granulate is heated from room temperature to 200°C at a rate of 10°C/min, held at 200°C for 15 minutes, and then cooled at a rate of 10°C/min, no exothermic peak due to recrystallization of the crystalline polymer is observed during cooling.

[17] The powder granulate according to any one of [1] to [16], wherein a peak temperature $Tc_{15}$ of an exothermic peak due to recrystallization observed during cooling in the first DSC measurement, and a peak temperature $Tc_2$ of an exothermic peak due to recrystallization of the crystalline polymer observed during cooling in a third DSC measurement, in which the powder granulate is heated from room temperature to 180°C at a rate of 10°C/min, held at 180°C for 2 minutes, and then cooled at a rate of 10°C/min, satisfy Formula (A):

$$\text{Formula (A): } 0.95 \leq Tc_{15} / Tc_2 \leq 1.05.$$

[18] The powder granulate according to any one of [1] to [17], wherein the powder granulate is a compaction granulate.

[19] A method for producing the powder granulate according to any one of [1] to [18] comprising:

a compaction granulation step of granulating crystalline polymer powder by a compaction granulation method, wherein the compaction granulation step is performed under the conditions that the temperature (Tp, °C) of the granulate immediately after granulation is less than or equal to the melting peak temperature $T_M$ of the crystalline polymer.

[20] The method according to [19], wherein the compaction granulation step is performed using a disc pelletizer-type compaction granulator.

The present application claims the benefit of priority from Japanese Patent Application Nos. 2023-080938 and 2023-173896, the entire contents of which are incorporated herein by reference.

Advantageous Effects of Invention

The first aspect of the present embodiment can provide a thermoplastic resin powder granulate which, without undergoing melt-kneading pelletization, has a stable shape and high bulk density, contributes to an improved working environment, and exhibits excellent feeding properties (stability and flowability) to processing machines, and which, compared with melt-kneaded pellets, can contribute to reduction in the amount of electricity used and, hence, to reduction in the amount of carbon dioxide generated during production.

The second aspect of the present embodiment can provide a crystalline polymer powder granulate that exerts excellent crystallization properties in molding processes.

Brief Description of Drawings

[Figure 1] Figure 1 is a photograph of the appearance of the powder granulate obtained in Example A1 using the acrylic resin powder A1.

[Figure 2] Figure 2 is a cross-sectional photograph of the powder granulate obtained in Example A1 using the acrylic resin powder A1.

[Figure 3] Figure 3 illustrates the results of DSC measurement of the bio-based polyester powder A2 of Example A4.

[Figure 4] Figure 4 is a photograph of the appearance of the powder granulate obtained in Example A4 using the bio-based polyester powder A2.

[Figure 5] Figure 5 is a cross-sectional photograph of the powder granulate obtained in Example A4 using the bio-based polyester powder A2.

[Figure 6] Figure 6 is a photograph of an injection molded product obtained in Example A5 from the powder granulate prepared in Example A1 with the acrylic resin powder A1.

[Figure 7] Figure 7 is a photograph of a molded sheet product obtained in Example A6 from the powder granulate prepared in Example A4 with the bio-based polyester powder A2.

[Figure 8] Figure 8 is a cross-sectional photograph of the powder granulate obtained in Example A7 using the bio-based polyester powder A3.

[Figure 9] Figure 9 is a cross-sectional photograph of the powder granulate obtained in Example A8 using the bio-based polyester powder A3.

[Figure 10] Figure 10 is a cross-sectional photograph of the powder granulate obtained in Example A9 using the bio-based polyester powder A4.

[Figure 11] Figure 11 is a graph showing the results of DSC measurement (cooling) demonstrating the "melt memory effects" of the crystalline polymer powder granulate (a PHBH powder granulate) obtained in Example B1.

[Figure 12] Figure 12 is a graph showing the results of DSC measurement (cooling) of the melt-kneaded pellets of the crystalline polymer containing a crystal nucleating agent, obtained in Reference Example B1.

[Figure 13] Figure 13 is a photograph illustrating the cross section of the crystalline polymer powder granulate (a PHBH powder granulate) obtained in Example B2.

[Figure 14] Figure 14 is a graph showing the results of DSC measurement (cooling) of the melt-kneaded pellets of the crystalline polymers, which do not contain a crystal nucleating agent, obtained in Reference Example B2.

[Figure 15] Figure 15 is a graph showing the results of DSC measurement (cooling) of the crystalline polymer powder (the bio-based polyester powder A1) described in Reference Example B3.

[Figure 16] Figure 16 is a graph showing the results of DSC measurement (cooling) of the PLA powder granulate obtained in Example B4.

Description of Embodiments

(First aspect)

A. Overview of thermoplastic resin powder granulate

The powder granulate of the present embodiment contains thermoplastic resin powder and includes an outer wall portion in which at least part of the thermoplastic resin powder located in the outermost region of the powder granulate is fused, and which accommodates (encloses) compacted thermoplastic resin powder. In the powder granulate of the present embodiment, the outer wall portion is located in the outermost region of the granulate. The outer wall portion is also referred to as a "shell portion" herein. The outer wall portion accommodates compacted thermoplastic resin powder, at least part of which may or may not be fused. The compacted thermoplastic resin powder accommodated inside the outer wall portion may be in an unfused form. Specifically, at least part of the compacted thermoplastic resin powder accommodated inside the outer wall portion may be in an unfused compacted powder form or partially fused form. The partially fused form refers to a form in which components of the thermoplastic resin powder are partially fused, but not sufficiently fused to form a solid structure capable of retaining the thermoplastic resin powder as in the outer wall portion. The inside of the outer wall portion is referred to as a "core portion" herein. The compacted thermoplastic resin powder is accommodated in the core portion inside the outer wall portion. The term "compacted thermoplastic resin powder" refers to the thermoplastic resin powder in the core portion having a bulk density that is higher than that of the thermoplastic resin powder before granulation.

The outer wall portion (shell portion) of the thermoplastic resin powder granulate according to the present embodiment has a dense structure containing a fused product of the thermoplastic resin powder. The core portion inside the shell portion is compacted, but has a looser structure than the dense structure (fused structure) of the outer wall portion including the fused product. The thermoplastic resin powder granulate of the present embodiment comprises a fused product of the thermoplastic resin powder serving as the outer wall that accommodates the compacted thermoplastic resin powder in the core portion. Accordingly, the powder granulate may have a stable structure, exhibit minimal powder loss, exhibit excellent handling properties and safety, and contribute to an improved working environment.

When the powder granulate of the present embodiment is used as a raw material for compounding to prepare a resin composition, the powder granulate can improve the capacity for raw material feeding, feeding stability, and feeding precision, and can contribute to an improvement in productivity. At the same time, the melt-kneading pelletization step can be omitted. This can reduce the amount of electricity necessary for the process and reduce the amount of carbon dioxide generated in the process.

The powder granulate of the present embodiment can be fed directly to various thermoplastic resin molding machines, such as an injection molding machine or an extruder, or can be used as a molding material. In such a case, the amount of carbon dioxide generated during processing can be reduced because the melt-kneading pelletization step can be omitted. In addition, the powder granulate of the present embodiment can have minimal thermal history since the heat required for pelletization has not been applied.

The outer wall portion (shell portion) has a fused structure in which at least part of the thermoplastic resin powder

located in the outermost region of the powder granulate is melted and fused. The outer wall portion may have a smooth surface with a glossy appearance. Alternatively, the outer wall portion may not be fused to have a smooth surface, but some components of the thermoplastic resin powder may be partially fused with adjacent components to constitute the outer wall portion. While the details are described below, the outer wall portion can be formed by compaction granulation, for example, by melting at least part of the thermoplastic resin powder at a surface in contact with a wall surface of the die hole, due to frictional heat or heat transfer from the wall surface. The outer wall portion can have any thickness depending on the conditions for producing the thermoplastic resin powder granulate.

The core portion is located inside the outer wall portion, which accommodates the compacted thermoplastic resin powder therein. The thermoplastic resin powder in the core portion may have a porous structure or unfused structure because heat is not transferred to the core portion during granulation. Since the distance between the core portion and the die-contacting surface is large, the core portion can have a structure in which the polymer powder raw material is maintained in powder form (i.e., an unfused structure or powder structure) or a structure in which the polymer powder raw material remains in powder form while a part thereof is fused.

The terms "outer wall portion (shell portion)" and "core portion" are used herein for convenience of description. As described above, the outer wall portion is formed by melting the thermoplastic resin powder with heat during granulation. Accordingly, the boundary between the outer wall portion (shell portion) and the core portion is not clearly defined in practice. The outer wall portion (shell portion) is a region including a fused structure of the thermoplastic resin powder, located in the outermost region of the powder granulate, and contributing to maintaining a certain shape of the powder granulate, whereas the core portion is a region located inside the outer wall portion (shell portion).

The powder granulate preferably has an approximately columnar or approximately prismatic form, and the powder granulate preferably comprises the outer wall portion formed on its lateral surface. In the present embodiment, it is preferable that the powder granulate has an approximately columnar or approximately prismatic form, with the outer wall portion formed on its lateral surface.

The powder granulate of the present embodiment can be obtained preferably by a powder compaction granulation method, and the production method is described in detail below.

The powder granulate of the present embodiment can be used as a raw material of thermoplastic resin in the production of a resin composition by melt compounding. In addition, the powder granulate can be introduced directly to various thermoplastic resin molding machines, such as an injection molding machine or an extruder, to obtain various types of molded products.

The powder granulate may be added during melt compounding of a resin composition to improve productivity. Specifically, the powder granulate is excellent in feed stability when introduced into an apparatus such as an extruder. Use of the powder granulate can significantly improve productivity of a resin composition (i.e., increase the compounding rate per hour). In addition, use of such powder granulate can markedly reduce working environment contamination caused by dusts, improve the workers' safe and healthy working environments, and substantially shorten the time required for equipment changeover and cleaning.

When the powder granulate is introduced directly into various resin molding machines, such as an injection molding machine or an extruder, the melt-kneading pelletization step can be omitted. Accordingly, the total amount of carbon dioxide generated during the process can be significantly reduced compared with a conventional technique in which a resin product is processed by a method including melt-kneading pelletization.

The powder granulate can have any suitable shape. A representative example of a basic form is a columnar pellet when the powder granulate is obtained by subjecting powder to compaction granulation in which the powder is allowed to pass through a circular die hole.

The term "die" used herein generally refers to a tool equivalent to a "mold" that shapes the powder granulate by compaction.

When the powder granulate is columnar, the powder granulate has a diameter of, for example, 2 mm to 7 mm, and preferably 3 mm to 5 mm. The powder granulate has a length (height) of, for example, 1 mm to 10 mm, and preferably 2 mm to 7 mm. The powder granulate having such a shape is easily handled. The diameter of the powder granulate can be adjusted based on, for example, the diameter of a die hole of a disc plate (die plate) used for granulation. The length of the powder granulate can be adjusted based on the distance between the disc plate and a cutter. Any suitable distance can be employed. The distance between the disc plate and the cutter can be, for example, 1 mm to 30 mm, more preferably 2 mm to 20 mm, and further preferably 3 mm to 10 mm.

The powder granulate can have any suitable bulk density. The bulk density of the powder granulate is preferably 0.3 kg/L to 2.0 kg/L, and more preferably 0.5 kg/L to 1.0 kg/L. Higher bulk density improves the feeding rate and feeding stability of the powder granulate to various processing machines. The bulk density is determined by allowing the powder granulate to freely fall into a measuring cup and fill it to the brim to obtain an exact 1-liter volume, and then measuring its mass (unit: kg/L).

The breaking strength of the powder granulate measured using the Kiya hardness tester is preferably 0.5 kg or higher, preferably 1.0 kg or higher, preferably 2.0 kg or higher, preferably 3.0 kg or higher, preferably 4.0 kg or higher, preferably 5.0 kg or higher, preferably 6.0 kg or higher, preferably 7.0 kg or higher, preferably 8.0 kg or higher, preferably 9.0 kg or higher, or preferably 10 kg or higher. The upper limit may exceed the measuring limit of the Kiya hardness tester (the measuring limit of WPF1600-B (tradename), manufactured by Shiro industry Co., is 10 kg). When the breaking strength is within the range described above, the powder granulate excellent in handling ease and melt processability can be obtained. The term "breaking strength" used herein refers to an average breaking stress (breaking load) measured by crushing 20 or more (preferably 25 or more) particles of the powder granulate in a direction perpendicular to the longitudinal direction (extrusion direction) of the powder granulate. Since the powder granulate comprises a shell portion formed of a fused resin, the powder granulate can maintain a stable shape as a granulate body. The diameter of the pressurizing surface of the pressurizing attachment of the Kiya hardness tester is, for example, 5 mm.

The powder granulate can have any suitable water content. The powder granulate may contain water added to facilitate granulation, in addition to the water originating from raw material powder. The amount of water added during granulation is described below.

The powder granulate can be dried after granulation. The final water content is preferably 10% by mass or lower, more preferably 5.0% by mass or lower, further preferably 3.0% by mass or lower, particularly preferably 1.0% by mass or lower, and most preferably 0.5% by mass or lower. The final water content of the powder granulate can be appropriately adjusted according to its intended use.

The powder granulate is preferably granulated without the addition of water. When the water content of the powder granulate is low, drying after granulation may not be necessary. Granulation performed without the use of water allows omission of drying, thereby significantly reducing the amount of carbon dioxide generated during powder granulation.

The water content of the powder granulate obtained without the addition of water is, for example, 1.0% by mass or lower, preferably 0.5% by mass or lower, more preferably 0.3% by mass or lower, and further preferably 0.2% by mass or lower.

The water content of the powder granulate is measured using an infrared water gauge, as described below.

The thermoplastic resin powder used in the present embodiment can have any suitable particle diameter depending on its form, provided that the effects of the present embodiment can be obtained. The maximal diameter of resin powder is preferably 5 mm and the minimal diameter thereof is preferably 0.0001 mm.

The average particle diameter of the thermoplastic resin powder is, for example, 0.001 mm to 1.0 mm. The average particle diameter of the thermoplastic resin powder is preferably 1.0 mm or smaller, more preferably 0.01 mm to 0.8 mm, and particularly preferably 0.1 mm to 0.5 mm. The average particle diameter can be measured by the laser diffraction method herein. The average particle diameter of the resin powder may be defined as the particle diameter (d50) corresponding to 50% in a cumulative particle size distribution by volume.

A single type of thermoplastic resin powder may be used alone, or two or more types thereof may be used in combination.

The thermoplastic resin powder can have any suitable bulk density depending on its form, provided that the effects of the present embodiment can be obtained. The bulk density of the thermoplastic resin powder is preferably 0.01 kg/L to 1 kg/L, preferably 0.05 kg/L to 0.8 kg/L, more preferably 0.1 kg/L to 0.8 kg/L, further preferably 0.1 kg/L to 0.6 kg/L, and particularly preferably 0.2 kg/L to 0.5 kg/L.

The thermoplastic resin powder may be a resin powder obtained by its production process. In other words, the thermoplastic resin powder may be in powder form due to the production process. Specifically, the thermoplastic resin powder may be a resin powder obtained by grinding resin in non-powder form, such as a pellet, bulk resin, or molded resin product. The ground resin powder can be obtained by, for example, processing a molded product, a pellet, or a sprue or runner generated during injection molding with a grinder (e.g., NEA MILL, SYLPHEED MILL, Atomizer, or Impact Mill (tradenames), manufactured by Dalton Corporation) at room temperature or, if necessary, at a temperature achieved using dry ice or liquid nitrogen.

The thermoplastic resin powder may comprise any suitable thermoplastic resin. Specific examples of thermoplastic resins include: general-purpose resin, such as high-density polyethylene (HDPE), medium-density polyethylene (MDPE), low-density polyethylene (LDPE), polypropylene (PP), polyvinyl chloride (PVC), polyvinylidene chloride, polystyrene (PS), polyvinyl acetate (PVAc), polyurethane (PUR), fluorine-based resin, ABS resin (acrylonitrile butadiene styrene resin), AS resin, and acrylic resin (PMMA); engineering plastics, such as polyamide (PA), polyacetal (POM), polycarbonate (PC), polyphenylene ether, modified polyphenylene ether (e.g., m-PPE, modified PPE, and PPO), polyesters (e.g., PET and PBT), and cyclic polyolefin (COP); super engineering plastics, such as polyphenylene sulfide (PPS), polytetrafluoroethylene (PTFE), polysulfone (PSF), polyethersulfone (PES), amorphous polyarylate (PAR), liquid crystal polymer (LCP), polyetheretherketone (PEEK), polyimide (PI), and polyamideimide (PAI); and core-shell rubbers obtained by emulsion polymerization or suspension polymerization.

Alternatively, a biodegradable resin may be used as the thermoplastic resin. Examples of biodegradable resins include: aliphatic polyester-based resins (e.g., homopolymers or copolymers of polyhydroxyalkanoate (PHA), polycaprolactone, polylactic acid, polyethylene succinate, polybutylene succinate adipate, and polyhydroxyvalerate, as well as modified products of such homopolymers or copolymers); aliphatic-aromatic polyester-based resins (e.g., block or random polymers of aliphatic carboxylic acid or hydroxy acid together with aromatic dicarboxylic acid, and 1,3-propanediol); and polyvinyl alcohol-based resins (e.g., polyvinyl alcohol, polyvinyl acetate, polyvinyl butyrate, and an ethylenevinyl alcohol copolymer).

In the present embodiment, as a particularly preferable thermoplastic resin powder, at least one resin selected from the group consisting of acrylic-based resin, methacrylic-based resin, polyhydroxyalkanoate (PHA)-based resin, polyolefin-based resin, polyamide-based resin, polyacetal-based resin, polyphenylene ether (PPE)-based resin, polyphenylene sulfide (PPS)-based resin, polyetheretherketone (PEEK)-based resin, polyimide (PI)-based resin, polyamide imide (PAI)-based resin, polyester-based resin, polycarbonate (PC)-based resin, polystyrene-based resin, polyketone-based resin, liquid crystal polymer (LCP), and core-shell polymer is used.

The polyhydroxyalkanoate (PHA)-based resin can be, for example, a compound produced in the body of a microorganism that consumes carbohydrates, oils and fats, or the like. Such polyhydroxyalkanoate is primarily obtained in powder form.

The polyhydroxyalkanoate-based resin contains, as a polymerization component, hydroxyalkanoic acid serving as a raw material component, and includes at least a repeat unit derived from the hydroxyalkanoic acid. The polyhydroxyalkanoate-based resin may be artificially synthesized or biosynthesized by a microorganism. Examples of hydroxyalkanoic acids include glycolic acid, 3-hydroxybutyrate, 3-hydroxypropionate, 3-hydroxyvalerate, 3-hydroxyhexanoate, 3-hydroxyheptanoate, 3-hydroxyoctanoate, 3-hydroxynanoate, 3-hydroxydecanoate, 3-hydroxytetradecanoate, 3-hydroxyhexadecanoate, 3-hydroxyoctadecanoate, 4-hydroxybutyrate, 4-hydroxyvalerate, 5-hydroxyvalerate, and 6-hydroxyhexanoate. The number of carbon atoms in the hydroxyalkanoic acid may be 2 or more, 3 or more, 4 or more, 5 or more, 6 or more, 7 or more, or 8 or more, and it is preferably 3 or more. The number of carbon atoms in the hydroxyalkanoic acid may be 15 or fewer, 12 or fewer, 10 or fewer, 8 or fewer, 6 or fewer, or 4 or fewer, preferably 10 or fewer, and particularly preferably 6 or fewer. A single type of hydroxyalkanoic acid may be used alone or two or more types thereof may be used in combination.

Preferred examples of polyhydroxyalkanoate-based resins include poly(3-hydroxyalkanoate) and poly(3-hydroxybutyrate-co-3-hydroxyhexanoate).

The acrylic-based resin, the methacrylic-based resin, and the core-shell type polymer are preferably used in powder form obtained by emulsion polymerization or suspension polymerization. The polymer, obtained in powder form by emulsion polymerization or suspension polymerization, can be used as the thermoplastic resin powder for granulation without further processing.

In the production of the powder granulate of the present embodiment, it is necessary to melt some components of the thermoplastic resin powder by frictional heat generated between the powder and the die wall, or by heat transfer during the granulation process, in order to form the outer wall portion (shell portion) of the granulate. When the softening onset temperature of a thermoplastic resin powder is higher than the granulation temperature, it is advantageous to mix the thermoplastic resin powder with another thermoplastic resin powder having a softening onset temperature lower than the granulation temperature to obtain a granulate.

The powder granulate may contain any suitable additive as needed. The additive may be in a powder or liquid form. Examples of additives include an antioxidant, a light stabilizer, a foaming agent, an ultraviolet absorber, an antiblocking agent, a heat stabilizer, an impact modifier, an antibacterial agent, a dispersant, a compatibilizer, a processing aid, a lubricant, a coupling agent, a crystal nucleating agent, a hydrolysis inhibitor, an oxygen scavenger, a colorant (a dye or pigment), and a binder. A single type of additive may be used alone or two or more types thereof may be used in combination.

The additive may be in a powder or liquid form.

The content of the additive in the powder granulate is, for example, 10% by mass or lower, preferably 5.0% by mass or lower, preferably 3.0% by mass or lower, and more preferably 1.0% by mass or lower.

The powder granulate of the present embodiment can contain a binder as an additive. The term "binder" used herein generally refers to a compound, present among the thermoplastic resin powder in addition to the resin powder components, that functions to bind the powder together and thereby enhance the breaking strength of the granulate. Various compounds that exert binding effects, preferably water-dispersible or water-soluble polymer compounds, polysaccharides, and the like can be appropriately selected and used as binders as needed.

It is preferable that the powder granulate be formed by melting and binding some of the components of the thermoplastic resin powder, and it is preferable that no binder be added.

When the binder is added to the powder granulate of the present embodiment, the content of the binder is generally 10% by mass or lower, preferably 5.0% by mass or lower, more preferably 3.0% by mass or lower, further preferably 1.0% by mass or lower, furthermore preferably 0.5% by mass or lower, particularly preferably 0.1% by mass or lower, and most preferably 0% by mass (undetectable), relative to the total mass of the powder granulate.

In an embodiment, a dispersant is preferably used as an additive. A surfactant is preferably used as the dispersant. The hydrophilic-hydrophobic balance of the dispersant (surfactant) can be adjusted by modifying the degree of esterification, the type of fatty acid (e.g., presence or absence of a hydroxyl group, saturated or unsaturated, or alkyl chain length), the degree of polymerization, and the like of the compound serving as the dispersant. Use of a dispersant may exert effects, such as improved productivity (ejection rate) of the powder granulate, reduction of frictional heat during granulation, and enhanced cleanability of a granulator.

Examples of dispersants include fatty acids, metal salts of fatty acids, fatty acid sulfonates, fatty acid amides, acrylamides, polyhydric alcohol fatty acid esters, and polyglycerin fatty acid esters. A single type of dispersant may be used alone or two or more types thereof may be used in combination.

In an embodiment, the dispersant is at least one selected from the group consisting of polyhydric alcohol fatty acid esters, fatty acid amides, polyglycerin fatty acid esters, condensed hydroxy fatty acids, and alcohol esters of condensed hydroxy fatty acids.

Polyhydric alcohol fatty acid ester is an ester compound composed of polyhydric alcohol and fatty acid. Examples of polyhydric alcohol fatty acid esters include esters formed of polyhydric alcohol, such as pentaerythritol or glycerin, and fatty acid having 8 or more carbon atoms (preferably 8 to 24, and more preferably 10 to 22 carbon atoms).

Fatty acid amide is a compound having a structure formed by dehydration condensation of fatty acid with ammonia or a primary or secondary amine. Examples of fatty acid amides include saturated fatty acid monoamides, such as lauric acid amide, palmitic acid amide, stearic acid amide, and behenic acid amide.

Polyglycerin fatty acid ester is an ester compound composed of polyglycerin and fatty acid. Examples of polyglycerin fatty acid esters include diglycerin palmitic acid ester, diglycerin stearic acid ester, diglycerin oleic acid ester, decaglycerin palmitic acid ester, decaglycerin stearic acid ester, and decaglycerin oleic acid ester.

The content of the dispersant is generally 0.01% by mass to 10% by mass, preferably 0.1% by mass to 7.0% by mass, and more preferably 0.3% by mass to 5.0% by mass, relative to the total mass of the powder granulate.

In an embodiment, a crystal nucleating agent is used as an additive. The crystal nucleating agent is preferably used when the powder granulate is mainly composed of crystalline thermoplastic resin powder. It is particularly preferable that the crystal nucleating agent be added when a bio-based polyester produced by an organism (e.g., polyhydroxyalkanoate (PHA)) is used as the thermoplastic resin powder. The use of a crystal nucleating agent allows the crystallization rate and the degree of crystallinity of the crystalline thermoplastic resin powder (e.g., bio-based polyester) to be increased, thereby improving not only rigidity and heat resistance but also productivity. Examples of crystal nucleating agents include: organometallic salt compounds, such as phosphoric acid ester metal salt, benzoic acid metal salt, pimelic acid metal salt, rosin metal salt, oxalic acid metal salt, and fatty acid metal salt; organic compounds, such as aliphatic organic ester, triallyl phosphate, polyalkylene glycol or a derivative thereof, aliphatic polyester, and benzylidene sorbitol; dyes and pigments, such as quinacridone, cyanine blue, and carbon black; minerals, such as talc, mica, kaolin, clay, carbonate mineral, metal oxide, and metal sulfate; and polymer compounds, such as an ionomer and high-melting-point polyamide. In an embodiment, talc, mica, kaolin, calcium carbonate, or the like is used as a crystal nucleating agent. A single type of crystal nucleating agent may be used alone or two or more types thereof may be used in combination.

The content of the crystal nucleating agent is generally 0.01% by mass to 10% by mass, preferably 0.1% by mass to 7.0% by mass, and more preferably 0.3% by mass to 5.0% by mass, relative to the total amount of the powder granulate.

B. Method for producing powder granulate

The powder granulate having the core portion and the shell portion of the present embodiment can be obtained by compacting the thermoplastic resin powder through a die and melting the thermoplastic resin powder at the surface in contact with the die. Such powder granulate can be preferably obtained by the compaction granulation method comprising extruding the thermoplastic resin powder through a die hole. The shell portion is formed during extrusion through the die hole; i.e., during extrusion granulation, by melting components of the thermoplastic resin powder at the surface in contact with the wall surface of the die hole, due to frictional heat generated between the powder and the wall surface or heat transfer from the wall surface.

By forming the shell portion, the powder granulate can maintain a stable shape (e.g., columnar or prismatic), and the powder granulate with excellent quality stability (e.g., shape stability and uniform hardness), low generation of fine particles, high hardness, and ease of handling can be obtained.

In an embodiment, the powder granulate can be obtained without using water. Therefore, drying is not necessary. This can reduce the electricity consumption during granulation and significantly decrease the amount of carbon dioxide generated in the process.

When the powder passes through the die during extrusion granulation of the powder granulate, frictional heat may be generated between the powder and the wall surface of the die hole. In such a case, the temperature of the powder granulate is increased by the frictional heat. If the temperature (Tp: unit: °C) of the granulate immediately after granulation is excessively higher than the softening onset temperature (Ts: equivalent to the melting point or glass transition temperature) of the thermoplastic resin powder, the thermoplastic resin powder would excessively melt, adhere to the wall surface of the die hole, or clog the die hole. Consequently, continuous granulation cannot be performed. If the temperature (Tp) of the granulate immediately after granulation is excessively lower than the softening onset temperature (Ts) of the resin powder, in contrast, the resin powder as the raw materials would remain in powder form because of the lack of binding ability, or the resulting granulate would be easily disintegrated by compaction. Thus, it is difficult to produce a granulate with a stable shape.

In order to stably produce the powder granulate, it is preferable that the temperature (Tp) of the granulate immediately after granulation and the softening onset temperature (Ts) of the thermoplastic resin powder be within specified ranges. Specifically, the method for producing the powder granulate of the present embodiment comprises a compaction granulation step of granulating the thermoplastic resin powder by the compaction granulation method comprising extruding the thermoplastic resin powder through a die hole, wherein the compaction granulation step is performed under the conditions that the temperature (Tp, °C) of the granulate immediately after granulation and the softening onset temperature (Ts, °C) of the thermoplastic resin powder preferably satisfy Formula (1), more preferably satisfy Formula (2), and further preferably satisfy Formula (3).

$$\text{Formula (1): } Ts - 30 \leq Tp \leq Ts + 10$$

$$\text{Formula (2): } Ts - 20 \leq Tp \leq Ts + 5$$

$$\text{Formula (3): } Ts - 15 \leq Tp \leq Ts$$

A left-hand side in any of Formulae (1) to (3) may be appropriately combined with a right-hand side in any of Formulae (1) to (3) to prepare another formula that defines a preferable range of Tp. For example, the compaction granulation step can be preferably performed under the conditions that Ts - 20 ≤ Tp ≤ Ts + 10, Ts - 15 ≤ Tp ≤ Ts + 10, Ts - 30 ≤ Tp ≤ Ts + 5, Ts - 15 ≤ Tp ≤ Ts + 5, Ts - 30 ≤ Tp ≤ Ts, or Ts - 20 ≤ Tp ≤ Ts is satisfied.

The temperature (Tp) of the granulate immediately after granulation can be measured using a contact thermocouple. The measurement of the temperature (Tp) of the granulate immediately after granulation can be carried out by first adjusting a powder granulating apparatus to a stable granulation state, then stopping the apparatus during granulation, inserting the thermocouple directly into the die or into the powder granulate inside the die hole, and quickly measuring the temperature. The measurement is performed at least 3 times (preferably 5 times), and the average of the measured values is defined as Tp. Even when granulation cannot be performed due to the powder adhesion to or clogging of the die, the temperature can be measured by inserting the thermocouple directly into the powder.

In order to efficiently obtain the powder granulate having the core-shell structure of the present embodiment, the most effective approach is to control the temperature of the die that is brought into direct contact with powder. Specifically, the temperature of the die is preferably regulated to satisfy the condition of Formula (1) by providing the die with a heating mechanism for temperature regulation, such as a heater or heat-carrying channel, and a cooling mechanism, such as a coolant-carrying channel.

Many general compaction granulators have a simple structure for ease of operation and thus cannot control the temperature of the die. Even in such a case, the temperature (Tp) of the granulate immediately after granulation may be adjusted and regulated by, for example, controlling the rotational speed of the regulator rollers, the diameter of the die hole, the effective pressurizing length of the die hole, the feeding rate of the powder raw materials, the contact area and duration between the powder raw materials and the die surface, or by insulating or cooling the granulation equipment.

In the absence of a die temperature control mechanism, the temperature is governed by the balance between heating due to frictional heat during granulation and heat dissipation to the surroundings. In order to efficiently obtain the powder granulate under conditions satisfying Formula (1), the softening onset temperature (Ts) of the thermoplastic resin powder is preferably 50°C to 150°C, more preferably 55°C to 120°C, and further preferably 60°C to 90°C.

The thermoplastic resin powder may comprise a single component or a combination of two or more components. When the difference between the softening onset temperature (Ts) of the target thermoplastic resin powder and the temperature (Tp) of the granulate is large, making it difficult to set the temperature of the granulate to satisfy any of the conditions defined by Formulae (1) to (3), a thermoplastic resin having a softening onset temperature lower than the temperature of the granulate may be blended with the target thermoplastic resin powder, and the mixture is then subjected to granulation. This procedure is advantageous for obtaining the granulate.

When the thermoplastic resin powder comprises two or more components, it is preferable to designate the softening onset temperature (Ts) of the component having the lowest Ts as the Ts of Formula (1) and to set the conditions, such as the die temperature, so that the temperature (Tp) of the granulate immediately after granulation satisfies Formula (1). It is more preferable to set the conditions, such as the die temperature, so that the softening onset temperature of each component of the thermoplastic resin powder satisfies Formula (1).

When the thermoplastic resin powder comprises two or more components, the amount of the component having the lowest softening onset temperature is 50% by mass or lower, preferably 30% by mass or lower, and more preferably 10% by mass or lower, relative to the total amount of the thermoplastic resin powder.

The term "softening onset temperature (Ts) of the thermoplastic resin powder" used herein refers to a melting point or a glass transition temperature, and can be measured using a differential scanning calorimeter (DSC). In an embodiment, the softening temperature corresponds to the melting point when an endothermic or exothermic peak is observed in the DSC measurement, and the softening temperature corresponds to the glass transition temperature when a discontinuity is observed in the baseline.

In DSC measurement, a sample of the thermoplastic resin powder, typically about 5 mg, is weighed and placed on a sample dish, and the temperature is increased at a rate of 10°C/min in a nitrogen stream to determine the softening onset temperature (Ts).

In the case of crystalline resin, the melting point is defined as the intersection of the baseline from the low temperature region and the tangent at the inflection point on the melting onset side where the endothermic peak of crystalline melting is observed (the point where the upward convex curve changes to a downward convex curve), and this melting point is designated as the softening onset temperature (Ts).

When a plurality of endothermic peaks of crystalline melting appear, the melting point of the peak that appears at the lowest temperature is designated as the softening onset temperature.

In the case of amorphous resin, the intersection of the baseline from the low temperature region and the tangent at the inflection point is defined as the glass transition temperature (Tg), and this temperature is designated as the softening onset temperature (Ts).

The powder granulate can be produced using a compaction granulator. Examples of granulators include disc pelletizer-type granulators, screw extrusion-type granulators, briquetting-type granulators, and tableting-type granulators. Among these, from the viewpoint of granule productivity and the quality and shape uniformity of the resulting powder granulates, use of a disc pelletizer-type compaction granulator is particularly preferable. In the case of the disc pelletizer type, a semi-wet granulation method in which an appropriate amount of water is incorporated may be adopted. According to the present embodiment, granulation can be performed without the use of water, in which case, a drying step may not be necessary. If granulation can be performed without the use of water, the energy required for drying can be reduced, and the amount of carbon dioxide generated in the process can be significantly reduced.

When the thermoplastic resin powder constitutes a mixture of two or more powder raw materials, it is preferable to uniformly mix the components using a suitable mixer. Examples of mixers include a Henschel mixer, a Nauta mixer, powder kneaders (KDH, KDA, CKD, and CPM) (Dalton Corporation), a Spartan mixer (SPM) (Dalton Corporation), and an SP granulator (SPG) (Dalton Corporation). To obtain a mixture with excellent granulation properties, it is preferable that the mixer/stirrer have appropriate stirring blades. For example, when a Henschel-type mixer is used, the mixer blades preferably include a combination of an upper blade and a lower blade, with the upper blade being a Y1 blade (tradename, Nippon Coke & Engineering Co., Ltd.) and the lower blade being an S0 blade (tradename, Nippon Coke & Engineering Co., Ltd.). It is also preferable to install a deflector in the stirring vessel to perform mixing. By performing a mixing step that allows uniform dispersion of the components throughout the mixture, the productivity and quality stability of the resulting powder granulate can be enhanced.

While a semi-wet granulation method can be adopted, the amount of water to be incorporated can be appropriately determined depending on properties of the powder (e.g., water-absorbing properties). In this case, the amount of water is 3 to 30 parts by mass, preferably 5 to 25 parts by mass, or more preferably 5 to 20 parts by mass, based on 100 parts by mass of the thermoplastic resin powder. The semi-wet method can be adopted when granulation is not stably performed.

The disc pelletizer-type granulator comprises, as its basic structure, 1 or 2 discs each having many holes with diameters of 2 mm to 30 mm, and rollers to press-feed raw materials into the holes of the discs. The thermoplastic resin powder (which may contain water) fed to a space between the disc and the rollers or between two discs is pressed into the holes of the discs as the rollers rotate, forming a columnar extrusion product. The extruded granulate is cut with the use of a cutter or the like on the back surface of the disc to obtain a pellet-shaped powder granulate. The length of a granulate can be adjusted based on the distance between the back surface of the disc and the cutter, the rotational speed of the rollers, and the like. The distance between the disc plate and the cutter can be set appropriately. The distance between the disc plate and the cutter is, for example, 1 mm to 30 mm, more preferably 2 mm to 20 mm, and further preferably 3 mm to 10 mm.

Specific examples of the disc pelletizer-type granulators include a roller disc die-type granulator, a roller ring die-type granulator, a double die-type granulator, and a flat die-type granulator. An example of a commercially available disc pelletizer-type granulator is the Disc Pelleter F series manufactured by Dalton Corporation.

C. Melt compounding using powder granulate

In an embodiment, the powder granulate is used as a raw material for thermoplastic resin compounding or as a molding material. An embodiment relates to use of the powder granulate of the embodiment as a raw material for thermoplastic resin compounding or as a molding material. For example, a melt compound of the powder granulate and another thermoplastic resin may be provided.

Melt compounding may be performed by any suitable method. For example, a kneader, a Banbury mixer, a roll, or a single-screw extruder or a multi-screw extruder having two or more screws can be used. Use of a twin-screw extruder is preferable. The composition obtained by melt-kneading is then pelletized.

In an embodiment, the powder granulate can be directly supplied to a resin processing apparatus, such as an injection molding machine or extruder, to produce various molded products.

(Second aspect)

The present embodiment relates to a powder granulate of crystalline polymer powder (crystalline polymer powder granulate), wherein the powder granulate has a first hold temperature $T_{H1}$, defined in a first DSC measurement in which the powder granulate is heated from room temperature to the first hold temperature $T_{H1}$ at a rate of 10°C/min, held at the first hold temperature $T_{H1}$ for 15 minutes, and then cooled at a rate of 10°C/min, and during cooling in the first DSC measurement, an exothermic peak due to recrystallization of the crystalline polymer is observed, and wherein the first hold temperature $T_{H1}$ is higher than the highest melting peak temperature $T_M$ of the crystalline polymer appearing during heating in the first DSC measurement.

The term "recrystallization" used herein refers to a phenomenon or process in which a crystalline polymer crystallizes during cooling after being heated to a temperature higher than the melting peak temperature $T_M$ of the crystalline polymer.

According to the present embodiment, a granulate of crystalline polymer powder having excellent crystallization properties in molding processing can be provided.

In the present embodiment, by producing the powder granulate under conditions that effectively utilize "melt memory effects" of the crystalline polymer, crystallization of the crystalline polymer (particularly a crystalline polymer having a low crystallization rate such as a bio-based polyester resin) is promoted. Accordingly, the powder granulate according to the present embodiment exhibits excellent crystallization properties during molding. For example, the powder granulate of the present embodiment can exhibit excellent crystallization properties during molding even without the use of a nucleating agent. Furthermore, the powder granulate of the present embodiment not only exhibits excellent moldability but also can allow modification of the physical properties of molded articles.

The powder granulate of the present embodiment has a stable shape and a high bulk density, improves the working environment, and exhibits excellent feeding characteristics (stability and fluidity) to processing machines without undergoing melt-kneading pelletization. In addition, such powder granulate can contribute to a reduction in the power consumption required for production, i.e., to a reduction in the amount of carbon dioxide generated, as compared with melt-kneading pelletization.

Many crystal nucleating agents are artificially synthesized substances or inorganic compounds, which can be incorporated into crystalline polymers as additives. The powder granulate of the present embodiment may contain a crystal nucleating agent. However, the powder granulate of the present embodiment can achieve the effects of promoting crystallization without the use of a crystal nucleating agent. It is preferable that a crystal nucleating agent is not used because the composition of the resin composition can be simplified, leading to a reduction in cost and streamlining of production processes. In addition, this also is preferable from the viewpoint of "safety," which should be taken into consideration in applications involving contact with organisms.

The present embodiment provides a crystalline polymer powder granulate that has a stable shape and a high bulk density, improves the working environment, and exhibits excellent feeding characteristics (stability and fluidity) to processing machines, even without undergoing melt-kneading pelletization. In addition, such powder granulate can contribute to a reduction in the amount of electricity used for production; i.e., reduction in the amount of carbon dioxide generated, as compared with melt-kneading pelletization. The melt memory effects can promote crystallization of the powder granulate of the present embodiment. Accordingly, mold processability and physical properties can be modified without the addition of a crystal nucleating agent. A person skilled in the art would understand that the powder granulate of the present embodiment can contain a crystal nucleating agent or can be used in combination with a crystal nucleating agent. When the powder granulate of the present embodiment contains a crystal nucleating agent or is used in combination with a crystal nucleating agent, the effects of promoting crystallization mediated by the crystal nucleating agent can be attained in addition to the effects of promoting crystallization caused by the melt memory effects.

The powder granulate of the present embodiment can exhibit a recrystallization temperature (Tc) in a relatively high temperature range due to the melt memory effects, thereby exerting excellent crystallization-promoting effects. In addition, the powder granulate of the present embodiment exhibits excellent persistence of these effects with respect to melt residence time, further enhancing the crystallization-promoting effects.

The powder granulate of the present embodiment is particularly useful for bio-based polyester resins having a low crystallization rate, such as polyhydroxyalkanoates (PHAs), and can significantly improve mold processability in, for example, injection molding, compression molding, thermoforming, casting, blown film (inflation) molding, extrusion coating, injection blow molding and injection stretch blow molding. Furthermore, when the powder granulate of the present embodiment is processed in a temperature range in which the melt memory effects can be effectively utilized, mold processability can be improved without the addition of a crystal nucleating agent.

A. Overview of powder granulate

The powder granulate of the present embodiment is described in 1) to 12) below.

1) The "melt memory effect" refers to the phenomenon in which the structural order of the crystalline phase remains in the melt when a crystalline polymer is heated and melted (thermoplasticized). The melt memory effect is unique to crystalline polymers. Even in a temperature range equal to or higher than the melting point, regions remain in which the polymer does not reach a disordered random state within a short period, due to a long relaxation time required for conversion to a randomly aggregated state caused by thermal disturbance.

2) The pseudo-crystalline phase structural order (hereinafter also referred to as "melt memory structure") remaining in the polymer melt due to the melt memory effect can exhibit effects similar to those of a crystal nucleating agent. When the melt memory structure remains in the molten resin, the rate of crystal growth nucleus formation (also referred to as nucleation frequency or nucleation rate) increases. That is, a large number of crystal nuclei can be generated in a short period, accelerating crystallization and shortening the molding process. The melt memory effect can be confirmed, for example, by DSC measurement, based on the observation that the recrystallization temperature obtained when the temperature is increased to above the melting point of the crystalline polymer and then cooled at a constant rate is shifted to a higher temperature compared with that of a reference material (e.g., a melt-kneaded pellet of the crystalline polymer).

3) The crystalline polymer powder granulate (preferably obtained by compaction using a disc pelletizer) is particularly effective in exerting the melt memory effect. In particular, granulating crystalline polymer powder under specified conditions by compaction (e.g., using a disc pelletizer) can effectively induce the melt memory effect. Specifically, when crystalline polymer powder is compacted through a die at a temperature at or below the melting point, the polymer powder receives strong shear stress from the die wall. Solid-phase deformation (deformation in the temperature range below the melting point) occurs, particularly in the crystalline polymer powder near the die wall, which can partially promote oriented crystallization. In general, for crystalline polymers, oriented crystallization efficiently progresses when a stretching operation is performed in the crystal relaxation temperature range, which exists between the glass transition temperature and the melting point. This effect is used, for example, to strengthen fibers and films. A similar effect is presumed to occur in the crystalline polymer powder due to solid-phase deformation

4) The crystalline phase in which oriented crystallization has progressed due to solid-phase deformation is crystallized in a flow deformation field. The size of the crystalline phase domain (the spatial size of the oriented-ordered region) can be larger than that of the crystalline phase domain of a melt-kneaded pellet obtained by natural cooling from a melted state. Even when overheated to a temperature slightly above the melting point, the oriented-ordered structure of the crystalline phase is relatively well preserved, and as a result, the melt memory effects are considered to be more readily exhibited.

5) In oriented crystallization caused by solid-phase deformation, the molecular weight of the crystalline polymer can influence the occurrence of the melt memory effects. Specifically, the melt memory effects arise due to a time delay during the transition of polymer molecular chains from a crystalline ordered state to a random state in the melt. As the molecular weight is higher, the relaxation time (the transition time to a random chain) is prolonged, which is advantageous for sustaining the effects. For effectively exerting the melt memory effects, the weight average molecular weight of the crystalline polymer is preferably 200,000 or more, more preferably 300,000 or more, more preferably 500,000 or more, or more preferably 700,000 or more. The weight average molecular weight of the crystalline polymer is, for example, 3,000,000 or less.

6) The occurrence of the melt memory effects in the crystalline polymer powder granulate is promoted by the compaction granulation method. Specifically, the effects can be exerted when the crystalline polymer powder is forced to deform through a die or similar device. Accordingly, the process temperature and deformation time affect the occurrence of the melt memory effects. In the compaction granulation method using a disc pelletizer, granulation at a suitable process temperature (from the glass transition temperature to the melting point) with a low roller rotation speed is advantageous for the occurrence of the melt memory effects.

7) In a powder granulate consisting of crystalline polymers, powder raw materials obtained by grinding molded products or stretched products (e.g., fibers, stretched films, or blow-molded products) can be used. Such use is advantageous for the occurrence of the melt memory effects. Specifically, powder obtained by grinding molded articles comprising oriented crystalline phases is effective for the occurrence of the melt memory effects during molding. The term "oriented crystallization" refers to crystallization that progresses in a flow field caused by external actions such as flow or stretching, producing ordered structure in a specific direction and an increased degree of crystallization.

8) Generally, to achieve the effect of a crystal nucleating agent, the crystalline structures of the target crystalline polymer and the crystal nucleating agent should be similar, which can facilitate the growth of crystal nuclei. From this perspective, the melt memory structure can serve as the origin for forming a crystal nucleus of the crystalline polymer, thereby effectively functioning as a crystal nucleating agent. Specifically, the melt memory structure of the crystalline polymer can serve as a fundamentally excellent crystal nucleating agent.

9) The powder granulate of the present embodiment can be used for molding, such as injection molding, compaction molding, thermoforming, casting, blown film (inflation) molding, extrusion coating, injection blow molding, or injection stretch blow molding, similarly to melt-kneaded pellets. Performing molding in a temperature range where the melt memory effects can be effectively used allows improvement of mold processability without adding a crystal nucleating agent.

10) From another perspective, the powder granulate of the present embodiment is obtained by a granulation method different from that for melt-kneading pellets. Such a granulation method may not require heater heating or may not require strand cutting. Compared with melt-kneaded pellet production, the total electricity required during granulation can be significantly reduced.

11) The production of melt-kneaded pellets by melt-kneading granulation suffers from process issues such as slow crystallization, insufficient strand solidification in a short time, which makes pelletization difficult, and inadequate crystallization of the pellets, which can cause self-aggregation during residual heat or reheating in drying, leading to block formation. These problems can be avoided by the powder granulation method of the present embodiment.

12) In melt-kneaded pellets containing a small amount of an inorganic substance (e.g., talc) as a crystal nucleating agent, the contact interface between the inorganic crystal nucleating agent and the base polymer can act as a structural defect. This may serve as a breaking point during film or sheet molding, potentially reducing productivity. Such defects are particularly disadvantageous when producing thin molded products, such as films. In addition, the contact interface between the crystal nucleating agent and the base polymer is a dissimilar interface; if the affinity is poor, physical properties of various molded products may be adversely affected. In contrast, the powder granulate of the present embodiment can promote crystallization by the crystal nucleating effect based on the melt memory structure of the crystalline polymer, eliminating the need for addition of a crystal nucleating agent and avoiding these concerns.

The powder granulate has a first hold temperature $T_{H1}$, defined in a first DSC measurement in which the powder granulate is heated from room temperature to the first hold temperature $T_{H1}$ at a rate of 10°C/min, held at the first hold temperature $T_{H1}$ for 15 minutes, and then cooled at a rate of 10°C/min, and during cooling in the first DSC measurement, an exothermic peak due to recrystallization of the crystalline polymer is observed. The first DSC measurement is preferably performed in a nitrogen stream.

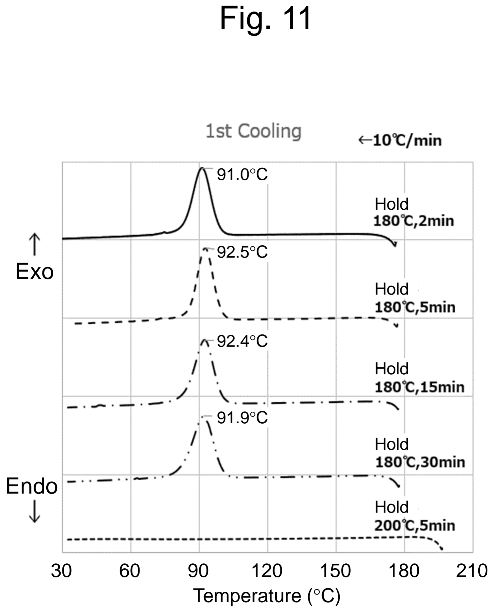

Figure 11 shows the results of DSC measurement (cooling) demonstrating the melt memory effects of the crystalline polymer powder granulate obtained in Example B1 (PHBH powder granulate). Specifically, the first DSC measurement was performed on the powder granulate of Example B1 (without addition of a crystal nucleating agent) under conditions where the temperature was increased from room temperature to the first hold temperature $T_{H1}$ (180°C in Figure 11), which is above the melting peak temperature $T_M$ of the crystalline polymer (around 147°C in Example B1), at a heating rate of 10°C/min, held at $T_{H1}$ for 2, 5, 15, or 30 minutes, and then cooled at 10°C/min. As shown in Figure 11, the exothermic peak due to recrystallization of the crystalline polymer is observed during cooling. While the powder granulate of the present embodiment is a crystalline polymer powder granulate, some of the granulated crystalline polymer powder has the melt memory structure, which is deduced to be prominent due to crystallization progressed by solid-phase deformation. Crystallization is thus promoted based on the melt memory structure even without the addition of a crystal nucleating agent during molding. Accordingly, as shown in Figure 11, the exothermic peak due to recrystallization of the crystalline polymer is observed during cooling in the first DSC measurement. The presence of the first hold temperature $T_{H1}$, which allows the exothermic peak to appear upon subsequent cooling, indicates the existence of the melt memory structure in the granulated crystalline polymer powder. $T_{H1}$ is higher than the melting peak temperature $T_M$ observed at the highest temperature during heating in the first DSC measurement.

The powder granulate preferably has a second hold temperature $T_{H2}$, defined in a second DSC measurement in which the powder granulate is heated from room temperature to the second hold temperature $T_{H2}$ at a rate of 10°C/min, held at the second hold temperature $T_{H2}$ for 15 minutes, and then cooled at a rate of 10°C/min, and during cooling in the second DSC measurement, no exothermic peak due to recrystallization of the crystalline polymer is observed. The second hold temperature $T_{H2}$ is higher than the first hold temperature $T_{H1}$. The second DSC measurement is preferably performed in a nitrogen stream.

When the powder granulate of the present embodiment is subjected to a third DSC measurement in which the temperature is increased from room temperature to the first hold temperature $T_{H1}$ at 10°C/min, held at $T_{H1}$ for 2 minutes, and then cooled at 10°C/min, the exothermic peak temperature $Tc_{15}$ due to recrystallization observed during cooling in the first DSC measurement and the exothermic peak temperature $Tc_2$ due to recrystallization observed during cooling in the third DSC measurement preferably satisfy Formula (A). The third DSC measurement is preferably performed in a nitrogen stream.

$$\text{Formula (A): } 0.95 \leq Tc_{15} / Tc_2 \leq 1.05$$

Formula (A) represents a condition in which the exothermic peak temperature ($Tc_{15}$) due to recrystallization after holding at the first hold temperature $T_{H1}$ for 15 minutes does not shift relative to the exothermic peak temperature ($Tc_2$) observed after holding at $T_{H1}$ for 2 minutes (preferably, not shifted to lower temperature), indicating that the melt memory effect is maintained with respect to the melting time. When Formula (A) is satisfied, the powder granulate exhibits excellent recrystallization properties. At least one first hold temperature $T_{H1}$ satisfying Formula (A) may exist. For example, at least one first hold temperature $T_{H1}$ satisfying Formula (A) may exist in a temperature range higher than the melting peak temperature $T_M$ and lower than the second hold temperature $T_{H2}$. The $Tc_{15}/Tc_2$ ratio is preferably 0.96 or more and 1.04 or less, more preferably 0.97 or more and 1.03 or less, further preferably 0.98 or more and 1.02 or less, and most preferably 0.99 or more and 1.01 or less.

The structure and related aspects of the powder granulate of the present embodiment are further described below.

The powder granulate of the present embodiment may comprise an outer wall portion in which at least part of the crystalline polymer powder located in the outermost region of the powder granulate is fused, and which accommodates compacted crystalline polymer powder.

In the powder granulate of the present embodiment, the outer wall portion is located in the outermost region of the granulate. The outer wall portion is also referred to as a "shell portion" herein. The compacted crystalline polymer powder is accommodated inside the outer wall portion, and at least part of the crystalline polymer powder may or may not be fused.

The compacted crystalline polymer powder inside the outer wall portion may be in an unfused form. Specifically, at least part of the compacted crystalline polymer powder accommodated inside the outer wall portion may be in an unfused compacted powder form or partially fused form. The partially fused form refers to a state in which components of the crystalline polymer powder are partially fused, but not sufficiently fused to form a solid structure capable of retaining the crystalline polymer powder as in the outer wall portion. The inside of the outer wall portion is also referred to herein as a "core portion." The core portion accommodates the compacted crystalline polymer powder. The term "compacted crystalline polymer powder" herein refers to the crystalline polymer powder in the core portion having a bulk density higher than that of the crystalline polymer powder before granulation.

The outer wall portion (shell portion) of the powder granulate of the present embodiment has a dense structure containing a fused product of the crystalline polymer powder. The core portion inside the outer wall portion, while compacted, has a looser structure than the dense fused structure of the outer wall portion. In the powder granulate of the present embodiment, the fused crystalline polymer powder forms the outer wall and retains the compacted crystalline polymer powder in the core portion. Accordingly, the powder granulate may have a stable structure, exhibit minimal powder loss, exhibit excellent handling properties and safety, and contribute to an improved working environment.

The outer wall portion (shell portion) has a fused structure in which at least part of the crystalline polymer powder located in the outermost region of the powder granulate is melted and fused. The outer wall portion may have a smooth surface with a glossy appearance. Alternatively, the outer wall portion may not be fused to have a smooth surface, but some components of the crystalline polymer powder may be partially fused with adjacent components to constitute the outer wall portion. While the details are described below, the outer wall portion can be formed by compaction granulation, for example, by melting at least part of the crystalline polymer powder at a surface in contact with a wall surface of the die hole, due to frictional heat or heat transfer from the wall surface. The outer wall portion can have any thickness depending on the conditions for producing the crystalline polymer powder granulate.

The core portion is located inside the outer wall portion, which accommodates the compacted crystalline polymer powder therein. The crystalline polymer powder in the core portion may have a porous structure or unfused structure because heat is not transferred to the core portion during granulation. Since the distance between the core portion and the die-contacting surface is large, the core portion can have a structure in which the crystalline polymer powder raw material is maintained in powder form (i.e., an unfused structure or powder structure) or a structure in which the polymer powder raw material remains in powder form while a part thereof is fused.

The terms "outer wall portion (shell portion)" and "core portion" are used herein for convenience of description. As described above, the outer wall portion is formed by melting crystalline polymer powder with heat during granulation. Accordingly, the boundary between the outer wall portion (shell portion) and the core portion is not clearly defined in practice. The outer wall portion (shell portion) is a region including a fused structure of the crystalline polymer powder, located in the outermost region of the powder granulate, and contributing to maintaining a certain shape of the powder granulate, whereas the core portion is a region located inside the outer wall portion (shell portion).

The powder granulate preferably has an approximately columnar or approximately prismatic shape, and the powder granulate preferably comprises the outer wall portion formed on its lateral surface. In the present embodiment, it is preferable that the powder granulate has an approximately columnar or approximately prismatic shape, with the outer wall portion formed on its lateral surface.

The crystalline polymer powder granulate of the present embodiment having the structure described above can be fed directly to various thermoplastic resin molding machines, such as an injection molding machine or an extruder, or can be used as a molding material.

The powder granulate of the present embodiment can be used as a raw material of thermoplastic resin in the production of a resin composition by melt compounding. When the powder granulate is used as a raw material for compounding, the powder granulate can improve raw material feeding capacity, feeding stability, and feeding precision, thereby contributing to an improvement in productivity. Specifically, the powder granulate is highly stable when introduced into an apparatus such as an extruder, which can significantly improve productivity of a resin composition (i.e., increase the compounding rate per hour). In addition, use of such powder granulate can markedly reduce working environment contamination caused by dusts, improve the workers' safe and healthy working environments, and substantially shorten the time required for equipment changeover and cleaning.

The powder granulate of the present embodiment can be preferably obtained by the powder compaction granulation method, and the production method is described in detail below.

The powder granulate of the present embodiment can have any suitable shape. A representative example of a basic form is a columnar pellet when the powder granulate is obtained by subjecting powder to compaction granulation in which the powder is allowed to pass through a circular die hole.

The term "die" used herein generally refers to a tool equivalent to a "mold" that shapes the powder granulate by compaction.

When the powder granulate is columnar, the powder granulate has a diameter of, for example, 2 mm to 7 mm, and preferably 3 mm to 5 mm. The powder granulate has a length (height) of, for example, 1 mm to 10 mm, and preferably 2 mm to 7 mm. The powder granulate having such a shape is easily handled. The diameter of the powder granulate can be adjusted based on, for example, the diameter of a die hole of a disc plate (die plate) used for granulation. The length of the powder granulate can be adjusted based on the distance between the disc plate and a cutter. Any suitable distance can be employed. The distance between the disc plate and the cutter can be, for example, 1 mm to 30 mm, more preferably 2 mm to 20 mm, and further preferably 3 mm to 10 mm.

The breaking strength of the powder granulate of the present embodiment measured using the Kiya hardness tester is preferably 1.0 kg or higher, preferably 2.0 kg or higher, preferably 3.0 kg or higher, preferably 4.0 kg or higher, preferably 5.0 kg or higher, preferably 6.0 kg or higher, preferably 7.0 kg or higher, preferably 8.0 kg or higher, preferably 9.0 kg or higher, or preferably 10.0 kg or higher. The upper limit may exceed the measuring limit of the Kiya hardness tester (the measuring limit of WPF1600-B (tradename), manufactured by Shiro industry Co., is 10 kg). When the breaking strength is within the range described above, the powder granulate excellent in handling ease and melt processability can be obtained. The term "breaking strength" used herein refers to an average breaking stress (breaking load) measured by crushing 20 or more (preferably 25 or more) particles of the powder granulate in a direction perpendicular to the longitudinal direction (extrusion direction) of the powder granulate. Since the powder granulate comprises a shell portion formed of a fused resin, the powder granulate can maintain a stable shape as a granulate. The diameter of the pressurizing surface of the pressurizing attachment of the Kiya hardness tester is, for example, 5 mm.

The apparent density ratio of the powder granulate of the present embodiment is, for example, 0.85 to 0.95, preferably 0.87 to 0.94, more preferably 0.89 to 0.93, or most preferably 0.90 to 0.92. A powder granulate with an apparent density ratio closer to 1 indicates a lower content of bubbles. When the apparent density ratio is 0.95 or lower, granulation productivity can be efficiently enhanced. An apparent density ratio of 0.85 or higher is advantageous for effectively exhibiting the melt memory effect.

The apparent density ratio is represented by the following formula:

Apparent density ratio = apparent density of powder granulate / apparent density of melt-kneaded pellet.

The "apparent density of the powder granulate" or the "apparent density of melt-kneaded pellets" can be determined by measuring the apparent density of 10 or more (preferably 15 or more) particles of the "powder granulate" or the "melt-kneaded pellets" using a densimeter (A&D Company, Limited, tradename: ELECTRONIC DENSIMETER MDS-300) and calculating the average. The "apparent density of melt-kneaded pellets" is measured by preparing melt-kneaded pellets without air bubbles using the same composition as that constituting the powder granulate, with a melt-kneading device such as a twin-screw extruder, at a temperature equal to or higher than the melting point of the crystalline polymer, and then measuring the apparent density of the resulting melt-kneaded pellets.

With regard to the powder granulate of the present embodiment, when the bulk density of the crystalline polymer powder before granulation is denoted as $\rho_1$ and the bulk density of the powder granulate is denoted as $\rho_2$, the bulk density ratio $\rho_2/\rho_1$ is, for example, 0.90 to 3.00, preferably 1.00 to 2.50, preferably 1.10 to 2.00, or preferably 1.10 to 1.80. When the bulk density ratio $\rho_2/\rho_1$ is 0.90 or higher, the powder granulate can effectively exert the melt memory effects. When the bulk density ratio $\rho_2/\rho_1$ is 3.00 or lower, granulation productivity can be improved, and the powder granulate that is excellent in the breaking strength can be effectively obtained.

The powder granulate can have any suitable bulk density, which is preferably 0.3 kg/L to 2.0 kg/L, or preferably 0.5 kg/L to 1.0 kg/L. Higher bulk density improves the feeding rate and feeding stability of the powder granulate to various processing machines.

As raw materials before granulation, crystalline polymer powder having any bulk density can be used. The bulk density of the crystalline polymer powder is preferably 0.05 kg/L to 1.0 kg/L, preferably 0.1 kg/L to 0.8 kg/L, or preferably 0.2 kg/L to 0.6 kg/L. When the bulk density of the crystalline polymer powder is within this range, compaction granulation is easily performed.

The bulk density is determined by allowing the polymer powder before granulation or the powder granulate to freely fall into a measuring cup and fill it to the brim to obtain an exact 1-liter volume, and then measuring its mass (unit: kg/L).

The powder granulate can have any suitable water content. The powder granulate may contain water added to facilitate granulation, in addition to the water originating from raw material powder. The amount of water added during granulation is described below.

During granulation of the powder granulate, local heat generation can lead to die clogging. Accordingly, for continuous granulation, it may be advantageous to suppress excessive heating during granulation by incorporating an appropriate amount of water, utilizing the heat of vaporization of water.

The powder granulate can be dried after granulation. The final water content of the powder granulate is preferably 10% by mass or lower, preferably 5.0% by mass or lower, preferably 3.0% by mass or lower, preferably 1.0% by mass or lower, or preferably 0.5% by mass or lower. The final water content of the powder granulate can be appropriately adjusted depending on its intended use.

The powder granulate is preferably granulated without the addition of water. When the water content of the powder granulate is low, drying after granulation may not be necessary. Granulation performed without the use of water allows omission of drying, thereby significantly reducing the amount of carbon dioxide generated during powder granulation.

The water content of the powder granulate produced without the addition of water is, for example, 1.0% by mass or lower, preferably 0.5% by mass or lower, preferably 0.3% by mass or lower, or preferably 0.2% by mass or lower.

The water content of the powder granulate is measured using an infrared water gauge, as described below.

The crystalline polymer powder used as raw materials can be any suitable crystalline thermoplastic resin.

Specific examples of crystalline polymers include high-density polyethylene (HDPE), medium-density polyethylene (MDPE), low-density polyethylene (LDPE), polypropylene (PP), polyurethane (PUR), fluorine-based resin, polyamide (PA), polyacetal (POM), and polyesters (PET, PBT, aliphatic polyester, aliphatic-aromatic polyesters, and the like). A single type of crystalline polymer may be used alone or two or more types thereof may be used in combination.

The weight average molecular weight (Mw) of the crystalline polymer, which is advantageous for effectively exhibiting the melt memory effect, is 200,000 or more, preferably 300,000 or more, more preferably 500,000 or more, and further preferably 700,000 or more. The melt memory effect arises due to a time delay during the transition of polymer molecular chains from a crystalline ordered state to a random state in the melt. The higher the molecular weight, the longer the relaxation time (the time required for the chain to reach a random state), which is advantageous for sustaining the effect. The weight average molecular weight is preferably 200,000 or more, since reduction or loss of the melt memory effect due to thermal disturbance can be effectively minimized. On the other hand, if the molecular weight is excessively high, the viscosity becomes too high, making solid-phase deformation difficult and powder granulation itself challenging. Accordingly, the weight average molecular weight of the crystalline polymer is preferably 3,000,000 or less, more preferably 2,000,000 or less, further preferably 1,500,000 or less, and still further preferably 1,000,000 or less.

The weight average molecular weight (Mw) of the crystalline polymer can be determined as the polystyrene-equivalent weight average molecular weight by gel permeation chromatography (GPC). For example, the measurement can be performed using a GPC apparatus such as Shodex GPC-101 (Resonac Corporation), a polystyrene gel Shodex K-804 (Resonac Corporation) as the column packing, and an organic solvent mobile phase (e.g., chloroform). The GPC apparatus, column packing, and organic solvent mobile phase may be appropriately selected according to the crystalline polymer.

The crystalline polymer powder may be a resin powder obtained through its production process. In other words, the crystalline polymer powder may be in powder form due to the production process. The crystalline polymer powder may be obtained by grinding non-powder resin, such as pellets, bulk resin, or molded resin products. The ground resin powder can be obtained by processing a molded product, a pellet, or a sprue or runner generated during injection molding with a grinder (e.g., NEA MILL, SYLPHEED MILL, Atomizer, or Impact Mill (tradenames), manufactured by Dalton Corporation) at room temperature or, if necessary, at a temperature achieved using dry ice or liquid nitrogen.

Powder raw materials obtained by grinding injection-molded products or molded products containing an oriented crystalline phase produced during a molding process that includes a stretching step, such as films, fibers, or blown containers, are advantageous for effectively exerting the melt memory effects. The term "oriented crystallization" refers to crystallization that progresses under external actions such as flow or stretching, producing ordered structure in a specific direction and an increased degree of crystallization.

The powder granulate of the present embodiment preferably contains at least one type of crystalline polymer powder having a melting peak temperature ($T_M$ [°C]) appearing at the highest temperature during heating in a first DSC measurement within the range of 70°C to 200°C, which is preferable for stable and continuous production using various powder granulating apparatuses. The $T_M$ [°C] of the crystalline polymer powder is preferably 70°C or more and 200°C or less, preferably 75°C or more and 190°C or less, preferably 80°C or more and 180°C or less, and preferably 90°C or more and 170°C or less. Using a crystalline polymer powder with $T_M$ [°C] within this range can more effectively exert the melt memory effects.

Biodegradable resins may be used as the crystalline polymer. Examples include aliphatic polyester-based resins (e.g., homopolymers or copolymers of polyhydroxyalkanoate (PHA), polycaprolactone, polylactic acid, polyethylene succinate, polybutylene succinate, polybutylene succinate adipate, and polyhydroxyvalerate, as well as modified products of such homopolymers or copolymers) and aliphatic-aromatic polyester-based resins (e.g., block or random polymers of aliphatic carboxylic acids or hydroxy acids together with aromatic dicarboxylic acids, and 1,3-propanediol). A single type thereof may be used alone or two or more types may be used in combination.

Polyhydroxyalkanoate (PHA) can be, for example, a compound produced in the body of a microorganism that consumes carbohydrates, oils and fats, or the like. Such polyhydroxyalkanoate is primarily obtained in powder form.

Polyhydroxyalkanoate contains, as a polymerization component, a hydroxyalkanoic acid serving as a raw material, and includes at least a repeat unit derived from the hydroxyalkanoic acid. Polyhydroxyalkanoate may be artificially synthesized or biosynthesized by microorganisms. Examples of hydroxyalkanoic acids include glycolic acid, 3-hydroxybutyrate, 3-hydroxypropionate, 3-hydroxyvalerate, 3-hydroxyhexanoate, 3-hydroxyheptanoate, 3-hydroxyoctanoate, 3-hydroxynanoate, 3-hydroxydecanoate, 3-hydroxytetradecanoate, 3-hydroxyhexadecanoate, 3-hydroxyoctadecanoate, 4-hydroxybutyrate, 4-hydroxyvalerate, 5-hydroxyvalerate, and 6-hydroxyhexanoate. The number of carbon atoms may be 2 or more, 3 or more, 4 or more, 5 or more, 6 or more, 7 or more, or 8 or more, and it is preferably 3 or more. The number of carbon atoms in hydroxyalkanoic acid may be 15 or fewer, 12 or fewer, 10 or fewer, 8 or fewer, 6 or fewer, or 4 or fewer, preferably 10 or fewer, and particularly preferably 6 or fewer. A single type of hydroxyalkanoic acid may be used alone or two or more types thereof may be used in combination.

Preferred examples of polyhydroxyalkanoates include poly(3-hydroxyalkanoate) and poly(3-hydroxybutyrate-co-3-hydroxyhexanoate).

Crystalline polymer powder as raw materials can have any suitable particle diameter depending on its form, provided that the effects of the present embodiment can be obtained. The maximal diameter of crystalline polymer powder is preferably 5 mm and the minimal diameter thereof is preferably 0.0001 mm.

The average particle diameter of crystalline polymer powder is, for example, 0.001 mm to 1.0 mm. The average particle diameter of crystalline polymer powder is preferably 1.0 mm or smaller, preferably 0.01 mm to 0.8 mm, or preferably 0.1 mm to 0.5 mm. The average particle diameter can be measured by the laser diffraction method herein. The average particle diameter of resin powder may be defined as the particle diameter (d50) corresponding to 50% in the cumulative particle size distribution by volume. A single type of crystalline polymer powder may be used alone or two or more types thereof may be used in combination.

The crystalline polymer powder may be a resin powder resin obtained through its production process. In other words, the crystalline polymer powder may be in powder form due to the production process. The crystalline polymer powder may be obtained by grinding non-powder resin, such as pellets, bulk resin, or molded resin products. The ground resin powder can be obtained by processing a molded product, a pellet, or a sprue or runner generated during injection molding with a grinder (e.g., NEA MILL, SYLPHEED MILL, Atomizer, or Impact Mill (tradenames), manufactured by Dalton Corporation) at room temperature or, if necessary, at a temperature achieved using dry ice or liquid nitrogen.

The powder granulate of the present embodiment can contain any suitable additive as needed. The additive may be in a solid form, such as powder, or in a liquid form. Examples of additives include a binder, a dispersant, a crystal nucleating agent, an antioxidant, a light stabilizer, a foaming agent, an ultraviolet absorber, an antiblocking agent, a heat stabilizer, an impact modifier, an antibacterial agent, a compatibilizer, a processing aid, a lubricant, a coupling agent, a hydrolysis inhibitor, an oxygen scavenger, and a colorant (a dye or pigment). A single type of additive may be used alone or two or more types thereof may be used in combination.

The additive may be in a solid form, such as powder, or in a liquid form.

The content of the additive in the powder granulate is, for example, 10.0% by mass or lower, preferably 5.0% by mass or lower, preferably 3.0% by mass or lower, and more preferably 1.0% by mass or lower.

The powder granulate of the present embodiment can contain a binder as an additive. The term "binder" used herein generally refers to a compound, present among the crystalline polymer powder in addition to the crystalline polymer powder components, that functions to bind the powder together and thereby enhance the breaking strength of the granulate. Various compounds that exert binding effects, preferably water-dispersible or water-soluble polymer compounds, polysaccharides, and the like can be appropriately selected and used as binders as needed.

In an embodiment, it is preferable that the powder granulate be formed by melting and binding some of the components of the crystalline polymer powder, and it is preferable that no binder be added.

The content of the binder is generally 10.0% by mass or lower, preferably 5.0% by mass or lower, preferably 3.0% by mass or lower, preferably 1.0% by mass or lower, preferably 0.5% by mass or lower, preferably 0.1% by mass or lower, or preferably 0% by mass (undetectable), relative to the total mass of the powder granulate.

In an embodiment, a dispersant is preferably used as an additive. A surfactant is preferably used as the dispersant. The hydrophilic-hydrophobic balance of the dispersant (surfactant) can be adjusted by modifying the degree of esterification, the type of fatty acid (e.g., the presence or absence of a hydroxyl group, saturated or unsaturated fatty acid, or the alkyl chain length), the degree of polymerization, and the like of the compound serving as the dispersant. Use of a dispersant may exert effects, such as an improved productivity (ejection rate) of the powder granulate, reduction of frictional heat during granulation, and enhanced cleanability of a granulator.

Examples of dispersants include fatty acids, metal salts of fatty acids, fatty acid sulfonates, fatty acid amides, acrylamides, polyhydric alcohol fatty acid esters, and polyglycerin fatty acid esters. A single type of dispersant may be used alone or two or more types thereof may be used in combination.

In an embodiment, the dispersant is at least one selected from the group consisting of polyhydric alcohol fatty acid esters, fatty acid amides, polyglycerin fatty acid esters, condensed hydroxy fatty acids, and alcohol esters of condensed hydroxy fatty acids.

Polyhydric alcohol fatty acid ester is an ester compound composed of polyhydric alcohol and fatty acid. Examples of polyhydric alcohol fatty acid esters include esters formed of polyhydric alcohol, such as pentaerythritol or glycerin, and fatty acid having 8 or more carbon atoms (preferably 8 to 24, and more preferably 10 to 22 carbon atoms).

Fatty acid amide is a compound having a structure formed by dehydration condensation of fatty acid with ammonia or a primary or secondary amine. Examples of fatty acid amides include saturated fatty acid monoamides, such as lauric acid amide, palmitic acid amide, stearic acid amide, and behenic acid amide.

Polyglycerin fatty acid ester is an ester compound composed of polyglycerin and fatty acid. Examples of polyglycerin fatty acid esters include diglycerin palmitic acid ester, diglycerin stearic acid ester, diglycerin oleic acid ester, decaglycerin palmitic acid ester, decaglycerin stearic acid ester, and decaglycerin oleic acid ester.

The content of the dispersant is generally 0% by mass to 10.0% by mass, preferably 0.01% by mass to 9.0% by mass, preferably 0.1% by mass to 7.0% by mass, and more preferably 0.3% by mass to 5.0% by mass, relative to the total mass of the powder granulate. The content of the dispersant is generally 10.0% by mass or lower, preferably 5.0% by mass or lower, preferably 3.0% by mass or lower, preferably 1.0% by mass or lower, preferably 0.5% by mass or lower, preferably 0.1% by mass or lower, or preferably 0% by mass (undetectable), relative to the total mass of the powder granulate.

The powder granulate of the present embodiment can comprise a crystal nucleating agent as an additive. Examples of crystal nucleating agents include: organometallic salt compounds, such as phosphoric acid ester metal salt, benzoic acid metal salt, pimelic acid metal salt, rosin metal salt, oxalic acid metal salt, and fatty acid metal salt; organic compounds, such as aliphatic organic ester, triallyl phosphate, polyalkylene glycol or a derivative thereof, aliphatic polyester, and benzylidene sorbitol; dyes and pigments, such as pentaerythritol, quinacridone, cyanine blue, and carbon black; minerals, such as talc, mica, kaolin, clay, carbonate mineral, metal oxide, and metal sulfate; and polymer compounds, such as an ionomer and high-melting-point polyamide. In an embodiment, talc, mica, kaolin, calcium carbonate, or the like is used as a crystal nucleating agent. A single type of crystal nucleating agent may be used alone or two or more types thereof may be used in combination.

The content of the crystal nucleating agent in the powder granulate is, for example, 0.1% by mass or more and 10.0% by mass or less, preferably more than 0.1% by mass to less than 10.0% by mass, preferably 0.2% by mass or more and 7.0% by mass or less, or preferably 0.3% by mass or more and 5.0% by mass or less.

In an embodiment, the powder granulate is substantially free of a crystal nucleating agent. Since the powder granulate of the present embodiment can exert the melt memory effects, the powder granulate can exert excellent crystallization properties during the molding even without the use of a crystal nucleating agent, when a crystalline polymer (in particular, a crystalline polymer exhibiting a low crystallization rate, such as the bio-based polyester resin) is used.

The term "substantially free of a crystal nucleating agent" means that the content of the crystal nucleating agent in the powder granulate is 0.1% by mass or less, preferably less than 0.1% by mass, preferably 0.01% by mass or less, preferably 0.005% by mass or less, preferably 0.001% by mass or less, or preferably 0% by mass (undetectable).

B. Method for producing crystalline polymer powder granulate

The powder granulate of the present embodiment can be produced in a temperature range, for example, from the glass transition temperature to the melting point of the crystalline polymer as a raw material.

The powder granulate of the present embodiment is preferably obtained by compacting the crystalline polymer powder through a die, wherein part of the crystalline polymer powder undergoes solid-phase deformation at the die contact surface. Preferably, the powder granulate can be obtained by a compaction granulation method in which the crystalline polymer powder is extruded through a die hole. The shell portion is formed during extrusion through the die hole; i.e., during extrusion granulation, by melting components of the thermoplastic resin powder at the surface in contact with the wall surface of the die hole, due to frictional heat generated between the powder and the wall surface or heat transfer from the wall surface.

By forming the shell portion, the powder granulate can maintain a stable shape (e.g., columnar or prismatic) and the powder granulate with excellent quality stability (e.g., shape stability and uniform hardness), low generation of fine particles, high hardness, and ease of handling can be obtained.

The powder granulate of the present embodiment is obtained by a granulation method different from melt-kneading pelletization and uses equipment different from melt-kneading machines. Consequently, the energy consumption during granulation can be reduced, and the generation of carbon dioxide during production can be significantly decreased. Furthermore, granulation can be performed at temperatures that do not reach those required for plasticization and melting, allowing the crystalline polymer to have a minimal thermal history.

In an embodiment, the powder granulate can be obtained by granulation without the use of water. In such a case, drying is not necessary. This can significantly reduce the amount of electricity used for granulation and the amount of carbon dioxide generated in the process.

When crystalline polymer powder is brought into contact with a die during compaction granulation of the powder granulate, frictional heat may be generated between the wall surface of the die and the powder. This increases the temperature of the powder granulate due to frictional heat. If the temperature (Tp: unit: °C) of the granulate immediately after granulation is excessively higher than the melting point Tm (°C) of the crystalline polymer (which may be different from the highest melting peak temperature $T_M$ (°C) observed in DSC measurement of the powder granulate), the crystalline polymer powder would excessively melt, adhere to the die wall or clog the die. Consequently, continuous granulation cannot be performed. If the temperature (Tp) of the granulate immediately after granulation is excessively lower than the Tm of the crystalline polymer, in contrast, the resin powder as the raw materials would remain in powder form because of the lack of binding ability, or a resulting granulate would be easily disintegrated by compaction. Thus, it is difficult to produce a granulate with a stable shape.

In order to stably produce a crystalline polymer powder granulate having the melt memory effects, it is preferable that the temperature (Tp) of the granulate immediately after granulation and the melting point Tm of the crystalline polymer be within specified ranges. In an embodiment, compaction granulation is performed under the conditions that the temperature Tp of the granulate is equal to or higher than the glass transition temperature Tg and equal to or less than the melting point Tm. Compaction granulation is preferably performed under conditions in which Tp is within a crystal relaxation temperature range that exists in a temperature range from the glass transition temperature Tg to the melting point Tm. The "crystal relaxation temperature range" is a region in which the crystalline phase of the crystalline polymer in a solid state below the melting point can be deformed by external stress.

The glass transition temperature Tg, the melting point Tm, and "crystal relaxation temperature range" can be measured by, for example, dynamic viscoelasticity measurement, DSC measurement, or other measurement techniques.

A preferable method for producing the powder granulate of the present embodiment comprises a compaction granulation step of granulating the crystalline polymer powder by the compaction granulation method, wherein the compaction granulation step is performed under the conditions that the temperature Tp (°C) of the granulate immediately after granulation is equal to or lower than the melting peak temperature $T_M$ of the crystalline polymer. The compaction granulation method preferably comprises extruding crystalline polymer powder through a die hole. The compaction granulation step is preferably performed under the conditions that the temperature Tp (°C) of the granulate immediately after granulation and the melting point Tm (°C) of the crystalline polymer satisfy Formula (1), the step is preferably performed under the conditions that Tp and Tm satisfy Formula (2), and the step is preferably performed under the conditions that Tp and Tm satisfy Formula (3).

$$\text{Formula (1): } Tm - 100 \leq Tp \leq Tm$$

$$\text{Formula (2): } Tm - 90 \leq Tp \leq Tm$$

$$\text{Formula (3): } Tm - 80 \leq Tp \leq Tm$$

The temperature (Tp) of the granulate immediately after granulation can be measured using a contact thermocouple. The measurement of the temperature (Tp) of the granulate immediately after granulation can be carried out by first adjusting a powder granulating apparatus to a stable granulation state, then stopping the apparatus during granulation, inserting the thermocouple directly into the die or into the powder granulate inside the die hole, and quickly measuring the temperature. The measurement is performed at least 3 times (preferably 5 times), and the average of the measured values is defined as Tp. Even when granulation cannot be performed due to the powder adhesion to or clogging of the die, the temperature can be measured by inserting the thermocouple directly into the powder.

In order to efficiently obtain the powder granulate of the present embodiment, the most effective approach is to control the temperature of the die that is brought into direct contact with powder. Specifically, the temperature of the die is preferably regulated to satisfy the condition of Formula (1) by providing the die with a heating mechanism for temperature regulation, such as a heater or heat-carrying channel, and a cooling mechanism, such as a coolant-carrying channel.

Many general compaction granulators have a simple structure for ease of operation and thus cannot directly control the temperature of the die. Even in such a case, the temperature (Tp) of the granulate immediately after granulation may be adjusted and regulated by, for example, controlling the rotational speed of the regulator rollers, the diameter of the die hole, the effective pressurizing length of the die hole, the feeding rate of the powder raw materials, the contact area and duration between the powder raw materials and the die surface, or by insulating or cooling the granulation equipment.

In the absence of a die temperature control mechanism, the temperature may be controlled by the balance between the heating due to frictional heat during granulation and heat dissipation to the surroundings. In order to efficiently obtain the powder granulate under the conditions satisfying, the melting point Tm of the crystalline polymer powder is preferably 70°C or more and 200°C or less, preferably 80°C or more and 180°C or less, or preferably 90°C or more and 170°C or less. Use of the crystalline polymer powder having $T_M$ within the range described above can exert the melt memory effects more effectively.

Crystalline polymer powder may comprise a single component or a combination of two or more components. In particular, when the difference between the melting point (Tm) of the target crystalline polymer powder and the temperature (Tp) of the granulate is large and it is difficult to set the granulate temperature so as to satisfy any of the conditions defined by Formulae (1) to (3), a thermoplastic resin having a melting point lower than the temperature of the granulate may be incorporated into the crystalline polymer powder to obtain a granulate as a mixture.

When crystalline polymer powder comprises two or more components, or when two or more melting points are observed, it is preferable that the melting point (Tm) of the component of the crystalline polymer powder having the lowest melting point be used as Tm in Formula (1), and that the conditions (e.g., the temperature of the die) be set so that the temperature (Tp) of the granulate immediately after granulation satisfies Formula (1). It is more preferable that the conditions (e.g., the temperature of the die) be set so that Formula (1) is satisfied with respect to the melting point (Tm) of any of the components of the crystalline polymer powder.

The content of the crystalline polymer powder in the powder granulate is, for example, 90% by mass or more, preferably 95% by mass or more, preferably 96% by mass or more, preferably 97% by mass or more, preferably 98% by mass or more, preferably 99% by mass or more, or preferably 99% by mass or more.

When crystalline polymer powder comprise two or more components, the amount of the component of the crystalline polymer powder having the lowest melting point is, for example, 50% by mass or less, preferably 30% by mass or less, or preferably 10% by mass or less, relative to the total amount of the crystalline polymer powder.

The melting point Tm of the crystalline polymer powder can be measured using a differential scanning calorimeter (DSC) herein. In DSC measurement, a sample of the crystalline polymer powder, typically about 5 mg, is weighed and placed on a sample dish, and heated at a rate of 10°C/min in a nitrogen stream to determine the melting point Tm. The melting point Tm of the crystalline polymer powder as used herein refers to the endothermic peak temperature of crystal melting observed during heating at a rate of 10°C/min.

While a plurality of endothermic peaks may appear during crystal melting, such multiple endothermic peaks are often observed in bio-based polyesters.

The powder granulate can be produced using various powder compaction granulators. Examples of preferable compaction granulators include disc pelletizer-type granulators, screw extrusion-type granulators, briquetting-type granulators, compaction-type granulators, and tableting-type granulators. Among these, from the viewpoint of granule productivity and the quality and shape uniformity of the resulting powder granulates, use of a disc pelletizer-type compaction granulator is particularly preferable. In the case of the disc pelletizer type, a semi-wet granulation method in which an appropriate amount of water is incorporated may be adopted. According to the present embodiment, granulation may be performed without the use of water, in which case, a drying step may not be necessary. If granulation can be performed without the use of water, the energy required for drying can be reduced, and the amount of carbon dioxide generated in the process can be significantly reduced.

When the crystalline polymer powder constitutes a mixture of two or more powder raw materials, it is preferable to uniformly mix the components using a suitable mixer. Examples of mixers include a Henschel mixer, a Nauta mixer, powder kneaders (KDH, KDA, CKD, and CPM) (Dalton Corporation), a Spartan mixer (SPM) (Dalton Corporation), and an SP granulator (SPG) (Dalton Corporation). To obtain a mixture with excellent granulation properties, it is preferable that the mixer/stirrer have appropriate stirring blades. For example, when a Henschel-type mixer is used, the mixer blades preferably include a combination of an upper blade and a lower blade, with the upper blade being a Y1 blade (tradename, Nippon Coke & Engineering Co., Ltd.) and the lower blade being an S0 blade (tradename, Nippon Coke & Engineering Co., Ltd.). It is also preferable to install a deflector in the stirring vessel to perform mixing. By performing a mixing step that allows uniform dispersion of the components throughout the mixture, the productivity and quality stability of the resulting powder granulate can be enhanced.

While a semi-wet granulation method can be adopted, the amount of water to be incorporated can be appropriately determined depending on properties of the powder (e.g., water-absorbing properties). In this case, the amount of water is 3 to 30 parts by mass, preferably 5 to 25 parts by mass, or more preferably 5 to 20 parts by mass, based on 100 parts by mass of the crystalline polymer powder. The semi-wet method can be adopted when granulation is not stably performed.

The disc pelletizer-type granulator comprises, as its basic structure, 1 disc (planar die) or 2 discs (cylindrical dies) each having many holes with diameters of 2 mm to 30 mm, and rollers to press-feed raw materials into the holes of the discs. The crystalline polymer powder (which may contain water) fed to a space between the disc and the rollers or between two discs is pressed into the holes of the discs as the rollers rotate, forming a columnar extrusion product. The extruded granulate is cut with the use of a cutter or the like on the back surface of the disc to obtain a pellet-shaped powder granulate. The length of a granulate can be adjusted based on the distance between the back surface of the disc and the cutter, the rotational speed of the rollers, and the like. The distance between the disc plate and the cutter can be set appropriately. The distance between the disc plate and the cutter is, for example, 1 mm to 30 mm, more preferably 2 mm to 20 mm, and further preferably 3 mm to 10 mm.

Specific examples of the disc pelletizer-type granulators include a roller disc die-type granulator, a roller ring die-type granulator, a double die-type granulator, and a flat die-type granulator. An example of a commercially available disc pelletizer-type granulator is the Disc pelletizer F series manufactured by Dalton Corporation.

Examples

Hereinafter, the present embodiment is described in more detail with reference to the Examples. However, the present embodiment is not limited to these Examples. The units "part" and "%" are based on mass unless otherwise specified.

(Test Examples concerning the first aspect: Example A and Comparative

Example A)

[Evaluation]

The powder granulates obtained in Example A and Comparative Example A were evaluated in the manner described below.

(1) Granulability (feasibility of granulation)
The obtained powder granulate was evaluated for its granulability in accordance with the following criteria.

A: A powder granulate having a core-shell structure was obtained, and a fused polymer was clearly observed in the shell portion.
B: A powder granulate having a core-shell structure was obtained, and a fused polymer was partially observed in the shell portion.
C: A powder granulate having an unstable core-shell structure was obtained, and a small amount of fused polymer was observed in the shell portion.
D: The granulate was unstable and readily disintegrated.
E: Granulation could not be performed because the material remained in powder form or because the die became clogged.

(2) Cross-sectional observation of granulate
A slice (thickness: 0.5 mm) was cut from the obtained powder granulate using a razor blade in a direction perpendicular to the extrusion direction from the die, and the cut surface was observed with an optical microscope.

(3) Bulk density

The dried powder granulate was allowed to fall freely into a 1-liter measuring cup and leveled to the brim. The mass of the powder occupying exactly 1 liter was measured, and the bulk density of the powder granulate (unit: kg/L) was calculated.

(4) Water content

The water content (unit: % by mass) remaining in the powder granulate was measured using an infrared moisture meter (FD-660, Kett Electric Laboratory Co., Ltd.).

(5) Breaking strength

The breaking stress (breaking strength) (unit: kg) of the powder granulate was measured using a Kiya hardness tester (tradename: WPF1600-B, Shiro industry Co.). The measured value was the average of 25 granules of the powder granulate. Specifically, the powder granulate was set in the hardness tester so that its lateral surface faced the bottom, and the breaking stress was measured by crushing the lateral surface using a cylindrical pressing tool with a diameter of 5 mm. In other words, the breaking stress was measured by compressing the powder granulate in a direction perpendicular to the longitudinal (extrusion) direction.

> A: Breaking strength of 10 kg (measurement limit) or higher
> B: Breaking strength of 5.0 kg or higher to lower than 10 kg
> C: Breaking strength of 2.0 kg or higher to lower than 5.0 kg
> D: Breaking strength of 0.5 kg or higher to lower than 2.0 kg
> E: Breaking strength of less than 0.5 kg or the powder granulate remaining in powder form

(6) Amount of carbon dioxide ($CO_2$) emission

The amount of carbon dioxide ($CO_2$) emitted per unit mass (per kg) of the powder granulate was calculated (unit: $kg(CO_2)/kg$) by multiplying the electricity consumed in powder granulation by the basic emission factor of 0.000362 (tons-$CO_2$/kWh), which is the value in the "Greenhouse Gas Emissions Calculation, Reporting, and Disclosure System" issued by the Ministry of the Environment (as described on the website, A0272 Basic Emission Factor for Actual Emissions of Kansai Electric Power Company in fiscal year 2020, disclosed on January 7, 2022).

[Production Example 1] Acrylic resin powder granulate

(Production of acrylic resin powder)

With the use of a polymerization apparatus equipped with a stirrer, a reflux condenser, a thermometer, a nitrogen gas inlet, and a feed pump, 140 parts by mass of water, 0.05 parts by mass of sodium dodecylbenzenesulfonate, and 0.1 parts by mass of sodium sulfate were mixed to obtain a mixture. The mixture was subjected to nitrogen substitution at 80°C, 0.1 parts by mass of potassium peroxodisulfate was added, and a monomer mixture consisting of 90 parts by mass of methyl methacrylate (which may be referred to as MMA) and 10 parts by mass of butyl acrylate (which may be referred to as BA) was continuously added with stirring over a period of 180 minutes, to perform emulsion polymerization. Sodium dodecylbenzenesulfonate (0.3 parts by mass) was added at 45 minutes and 90 minutes after the start of monomer mixture addition. After completion of addition of the monomer mixture, polymerization was continued with stirring for an additional 1 hour, and the reaction was terminated to obtain an acrylic copolymer latex.

The obtained latex was cooled to room temperature, and then subjected to salting-out with calcium chloride, solidified, washed with water, and dried to obtain acrylic resin powder A1.

The obtained acrylic resin powder A1 was sieved through a 10-mesh wire screen (mesh opening: approximately 2.5 mm), and the powder that had completely passed through the screen was collected. The bulk density of the powder was 0.32 kg/L, and the glass transition temperature (Tg) thereof was measured to be 81°C using a differential scanning calorimeter (DSC, tradename: DSC6220, Hitachi High-Tech Science Corporation).

[Example A1]

(Production of acrylic resin powder granulate)

The obtained acrylic resin powder A1 was used as a raw material and introduced into a disc pelletizer (tradename: Disc Pelleter F-5/11-175, manufactured by Dalton Corporation). A powder granulate in a pellet form was obtained under conditions of a roller rotation speed of 108 rpm. The thickness of the die plate of the disc pelletizer was 15 mm, and the hole diameter was 3 mmφ. The length of the die plate in which the powder receives compaction stress from the die wall (referred to as the effective length) was set to 10 mm.

The temperature of the powder granulate immediately after granulation was adjusted depending on factors such as the number of rotations of the rollers of the granulator, the effective pressurizing length of the die holes, and heating or cooling of the die plate.

The temperature of the granulate immediately after granulation was measured by stopping the apparatus after granulation had been stabilized, inserting a thermocouple directly into the die hole, and quickly measuring the temperature of the compacted powder inside the die. The measurement was performed 5 times, and the average value was designated as the temperature (Tp) of the granulate immediately after granulation. Even if granulation could not be performed because the powder had adhered to the die or caused clogging, the thermocouple was inserted directly into the powder in the same manner to measure the temperature thereof.

In Example A1, the temperature (Tp) of the granulate immediately after granulation was 5°C lower than the softening onset temperature (81°C) of the acrylic resin powder A1 used as the raw material (i.e., the temperature of the granulate was 76°C). An approximately columnar granulate was stably obtained.

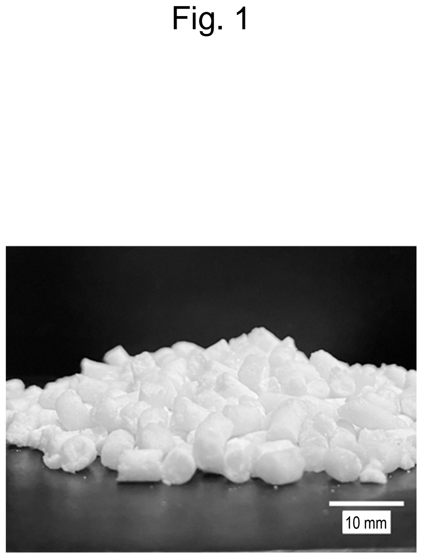

Figure 1 shows a photograph of the appearance of the powder granulate obtained in Example A1. As shown in Figure 1, an approximately columnar compaction granulate was stably obtained.

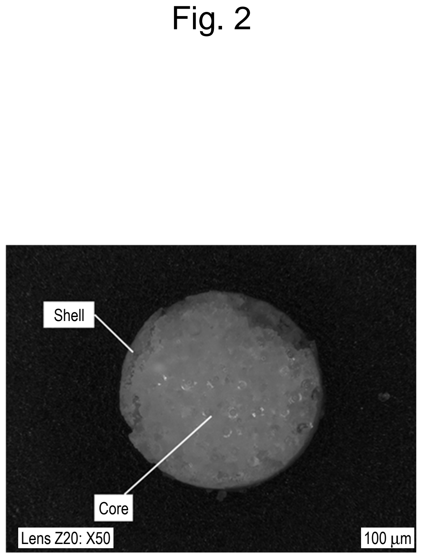

The powder granulate obtained in Example A1 was observed to have, on its lateral surface, an outer wall structure (shell structure) comprising a fused portion of a component of the thermoplastic resin powder, with unfused powder inside the outer wall structure (core portion). Figure 2 shows a cross-sectional photograph on a plane perpendicular to the longitudinal (extrusion) direction of the powder granulate obtained in Example A1.

The powder granulate of Example A1 had a bulk density of 0.58 kg/L, a water content of 0.12% by mass, and a breaking strength of 6.9 kg, and was easy to handle.


[Example A2]

In Example A2, the temperature (Tp) of the granulate immediately after granulation was 15°C lower than the softening onset temperature (81°C) of the acrylic resin powder A1 as the raw material (i.e., the temperature of the granulate was 66°C). The temperature of the granulate was controlled by reducing the number of rotations of the rollers. The powder granulate obtained in Example A2 also had a core-shell structure, similar to that of the powder granulate obtained in Example A1.

The powder granulate of Example A2 had a bulk density of 0.52 kg/L, a water content of 0.2% by mass, and a breaking strength of 5.1 kg and was easy to handle.


[Example A3]

In Example A3, the temperature (Tp) of the granulate immediately after granulation was 26°C lower than the softening onset temperature (81°C) of the acrylic resin powder A1 as the raw material (i.e., the temperature of the granulate was 55°C). The temperature of the granulate was controlled by further reducing the number of rotations of the rollers and forcibly cooling the disc plate by blowing air thereto. The powder granulate obtained in Example A3 also had a core-shell structure, similar to that of the powder granulate obtained in Example A1.

The powder granulate of Example A3 had a bulk density of 0.6 kg/L, a water content of 0.15% by mass, and a breaking strength of 2.7 kg and was easy to handle.

Table 1 shows the conditions for producing the powder granulates obtained in Examples A1 to A3 and the results of measurements of the powder granulates.

[Comparative Example A1]

In Comparative Example A1, the temperature (Tp) of the granulate immediately after granulation was 41°C lower than the softening onset temperature (81°C) of the acrylic resin powder A1 as the raw material (i.e., the temperature of the granulate was 40°C). The temperature of the granulate was controlled by changing the effective length of the die to 5 mm and forcibly cooling the disc plate.

In Comparative Example A1, the acrylic resin powder A1 passed through the die hole in powder form, and a granulate was not obtained.

[Comparative Example A2]

In Comparative Example A2, the temperature of the granulate immediately after granulation was 14°C higher than the softening onset temperature (81°C) of the acrylic resin powder A1 as the raw material (i.e., the temperature of the granulate was 95°C). The temperature of the granulate was controlled by forcibly heating the disc plate using an external heater.

In Comparative Example A2, the acrylic resin powder A1 clogged the die hole, and a granulate was not obtained.

Table 1 shows the results of evaluation of the powder granulates obtained in Examples A1 to A3 and Comparative Examples A1 and A2.

[Table 1]

| | | Ex. A1 | Ex. A2 | Ex. A3 | Comp. Ex. A1 | Comp. Ex. A2 |
|---|---|---|---|---|---|---|
| Conditions for producing powder granulate | Number of rotations of roller (pm) | 108 | 72 | 54 | 72 | 72 |
| | Effective length of die (mm) | 10 | 10 | 10 | 5 | 10 |
| | Powder feeding rate (kg/hr) | 35 | 35 | 35 | 35 | 35 |
| | Die heating (heated/not heated) | Not heated | Not heated | Not heated | Not heated | Heated |
| | Die cooling (cooled/not cooled) | Not cooled | Not cooled | Cooled | Cooled | Not cooled |
| | Tp (°C) | 76 | 66 | 55 | 40 | 95 |
| | Ts (°C) | 81 | 81 | 81 | 81 | 81 |
| | Tp-Ts (°C) | -5 | -15 | -26 | -41 | 14 |
| | Consumed electricity (kW) | 6.93 | 6.24 | 5.2 | - | - |
| | Amount of $CO_2$ emitted (kg($CO_2$)/kg) | 0.0717 | 0.0645 | 0.0537 | - | - |
| Results of property evaluation of powder granulate | Granulability (A to E) | A | A | B | E | E |
| | Shell structure (Presence or absence of fused material) | Presence of fused material | Presence of fused material | Presence of fused material | - | - |
| | Core structure | Presence of residual powder | Presence of residual powder | Presence of residual powder | - | - |
| | Bulk density (kg/L) | 0.58 | 0.52 | 0.6 | 0.32 | - |
| | Water content (wt%) | 0.12 | 0.2 | 0.15 | - | - |
| | Breaking strength (kg) | 6.9 (B) | 5.1 (B) | 2.7 (C) | (E) | - |

Tp: Temperature of granulate immediately after granulation
Ts: Softening onset temperature of thermoplastic resin powder (glass transition temperature herein)
Presence of residual powder: The term "presence of residual powder" refers to a situation in which a mixture of powder and partially fused powder is observed, as well as a situation in which only powder is observed.

[Example A4] Bio-based polyester powder granulate

Pellets of poly(3-hydroxybutyrate-co-3-hydroxyhexanoate) (PHBH), which is a type of PHA and is a copolyester of 3-hydroxybutyric acid and 3-hydroxyhexanoic acid (tradename: Green planet X131A, produced by Kaneka Corporation, hexanoate content: 6%) were ground and sieved through a 10-mesh wire screen to obtain a bio-based polyester powder A2.

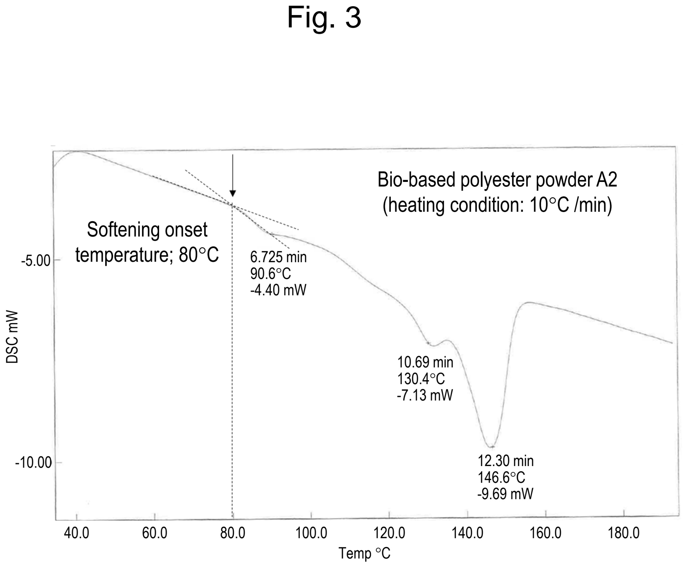

The bio-based polyester powder A2 was subjected to DSC measurement, and the softening onset temperature (Ts) was measured to be 80°C. As shown in Figure 3, the softening onset temperature (Ts) was determined at the intersection of the baseline at low temperature and the tangent at the inflection point on the melting onset side of the first observed endothermic peak of crystalline melting.

In the same manner as in Example A1, the bio-based polyester powder A2 was introduced into the disc pelletizer to obtain a powder granulate.

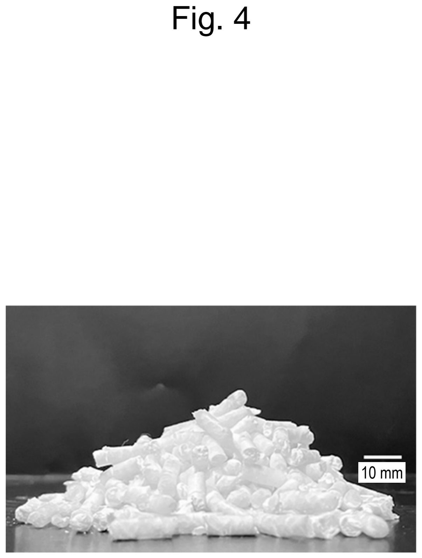

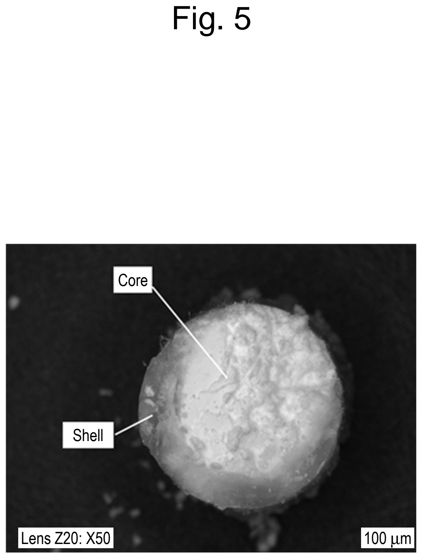

In Example A4, the temperature (Tp) of the granulate immediately after granulation was 81°C, which was 1°C higher than the softening onset temperature Ts (80°C), and an approximately columnar granulate was obtained stably. The lateral surface of the resulting powder granulate had an outer wall structure (shell structure) comprising a fused polymer of a component of the thermoplastic resin powder, and an unfused powder was observed inside (core portion) the outer wall structure. Figure 4 shows a photograph of the appearance of the powder granulate of Example A4, and Figure 5 shows a cross-sectional photograph of the powder granulate of Example A4.

The powder granulate of Example A4 had a bulk density of 0.50 kg/L, a water content of 0.48% by mass, and a breaking strength of 10 kg or higher, and was easy to handle.

[Example A5] Injection molding using powder granulate

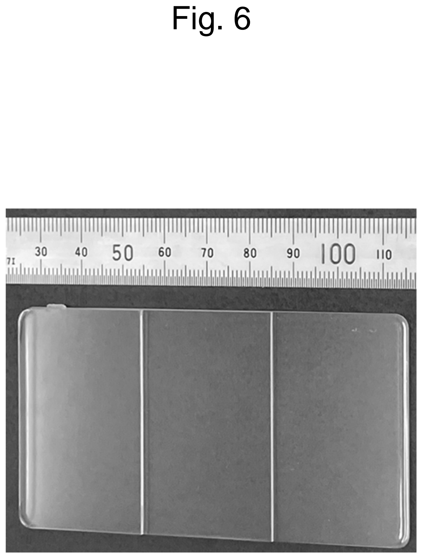

The powder granulate consisting of the acrylic resin powder A1 obtained in Example A1 was introduced into an injection molding machine (tradename: EX75SX, manufactured by SHIBAURA MACHINE CO., LTD). Injection molding was performed under conditions of a resin temperature of 240°C, a mold temperature of 60°C, and a cooling time of 30 seconds, to obtain a molded product having a business card size (88 mm × 53 mm) in the form of a three-step plate with thicknesses of 1, 2, and 3 mm. A photograph of the obtained injection-molded product is shown in Figure 6.

[Example A6] Sheet extrusion molding using powder granulate

The powder granulate consisting of the bio-based polyester powder A2 (PHBH) obtained in Example A4 was introduced into a sheet extruder (tradename: KTZ15, Technovel Corporation). A single layer extruded sheet with a thickness of 0.5 mm and a width of 100 mm was obtained at an extrusion rate of 2 kg/hr through a T die. The roll temperature was set at 20°C and the winding rate was set at 5 m/min.

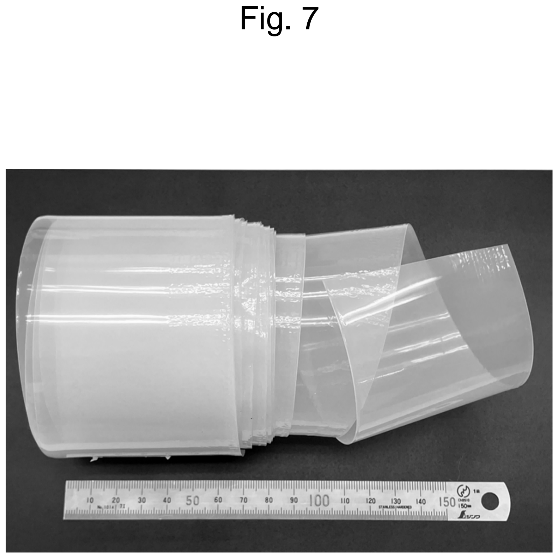

While extrusion molding was performed without melt-kneading pelletization in Example A6, a sheet molded product substantially equivalent to that obtained with melt-kneading pelletization was obtained. Figure 7 shows a photograph of the resulting sheet molded product.

[Example A7]

Pellets of poly(3-hydroxybutyrate-co-3-hydroxyhexanoate) (PHBH) (tradename: Green planet X151A, produced by Kaneka Corporation, hexanoate content: 11%) were ground and sieved through a 10-mesh wire screen to obtain a bio-based polyester powder A3.

The bio-based polyester powder A3 was subjected to DSC measurement in the same manner as in Example A4, and the softening onset temperature (Ts) was found to be 80°C.

One hundred parts by mass of the bio-based polyester powder A3 was introduced into an FM mixer (tradename: 5FM5C/I, manufactured by Nippon Coke & Engineering Co., Ltd., processing volume: 5 L). While rotating the stirring blades at 2,000 rpm, 20 parts by mass of tap water was continuously sprayed onto the bio-based polyester powder A3 for 10 minutes to obtain a water-containing powder mixture.

The FM mixer was equipped with a combination of an upper Y1 blade and a lower S0 blade (both tradename, manufactured by Nippon Coke & Engineering Co., Ltd.), and a baffle (also referred to as a deflector) was installed in the stirring vessel.

The resulting water-containing powder was introduced into a disc pelletizer in the same manner as in Example A1, and an approximately columnar granulate precursor was obtained.

In Example A7, a semi-wet granulation method was employed. The presence of an appropriate amount of water increased the bulk density of the powder, improved the feeding of the powder into the die hole, reduced excessive heat generation during granulation, and prevented clogging of the die. As a result of these effects, the granulation rate was improved, reaching 88 kg/hr for the granulate precursor.

In Example A7, the temperature of the granulate precursor immediately after granulation was 54°C, which was 26°C lower than the softening onset temperature (80°C) of the bio-based polyester powder A3 as the raw material. A columnar granulate precursor was obtained stably.

The obtained granulate precursor was dried using a hot-air circulation dryer (tradename: PH-402, manufactured by ESPEC Corp.) at 140°C until the water content was reduced to 0.5 wt% or less, thereby yielding a powder granulate.

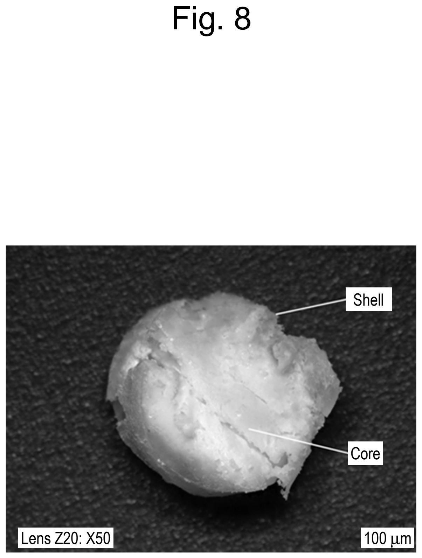

The resulting powder granulate was found to have a core-shell structure similar to that of the powder granulate obtained in Example A1. Figure 8 shows a cross-sectional photograph of the powder granulate of Example A7.

The powder granulate of Example A7 had a bulk density of 0.49 kg/L, a water content of 0.27% by mass, and a breaking strength of 10.0 kg or higher, and was easy to handle.

[Example A8]

The bio-based polyester powder A3 used in Example A7 was introduced into a disc pelletizer in the same manner as in Example A1, and a powder granulate was obtained. Unlike in the case of Example A7, water was not added in Example A8.

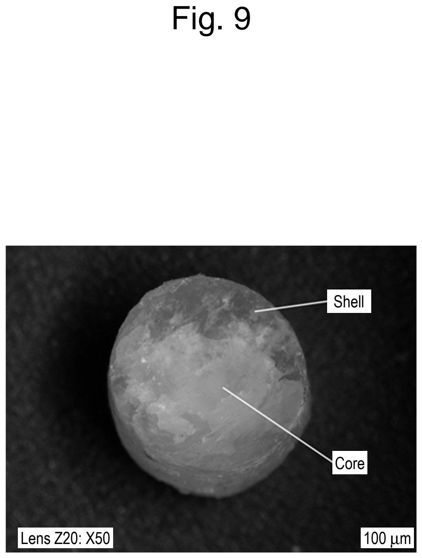

The resulting powder granulate was found to have a core-shell structure similar to that of the powder granulate obtained in Example A1. Figure 9 shows a cross-sectional photograph of the powder granulate of Example A8.

The powder granulate of Example A8 had a bulk density of 0.53 kg/L, a water content of 0.52% by mass, and a breaking strength of 10.0 kg or higher, and was easy to handle.

[Example A9]

Pellets of polyhydroxyalkanoate (PHA) (tradename: DAH-04267, produced by Danimer scientific, U.S.A.) were ground and sieved through a 10-mesh wire screen to obtain a bio-based polyester powder A4.

The bio-based polyester powder A4 was subjected to DSC measurement in the same manner as in Example A4, and the softening onset temperature (Ts) was measured to be 85°C.

In Example A9, the bio-based polyester powder A4 was used to perform granulation with the addition of 20 parts by mass of tap water, as in Example A7.

In Example A9, the granulation rate of the granulate was 39 kg/hr, and the temperature of the precursor of the granulate immediately after granulation was 76°C, which was 9°C lower than the softening onset temperature (85°C) of the bio-based polyester powder A3 as the raw material (i.e., the temperature of the granulate was 76°C). The approximately columnar granulate precursor was obtained stably.

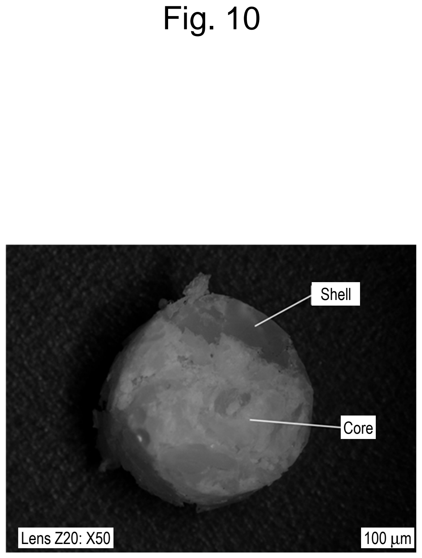

The obtained granulate precursor was dried using a hot-air circulation dryer at 140°C until the water content was reduced to 0.5 wt% or less, as in Example A7, thereby yielding a powder granulate. The resulting powder granulate was found to have a core-shell structure. Figure 10 shows a cross-sectional photograph of the powder granulate of Example A9.

The powder granulate of Example A9 had a bulk density of 0.35 kg/L, a water content of 0.30% by mass, and a breaking strength of 10.0 kg or higher, and was easy to handle.

Table 2 shows the evaluation results of Examples A4 and A7 to A9.

[Table 2]

| | | Ex. A4 | Ex. A7 | Ex. A8 | Ex. A9 |
|---|---|---|---|---|---|
| | | Bio-based polyester powder A2 | Bio-based polyester powder A3 | Bio-based polyester powder A3 | Bio-based polyester powder A4 |
| Conditions for produ-cing pow-der granu-late | Addition of water (parts) | - | 20 | - | 20 |
| | Number of rotations of roller (rpm) | 108 | 108 | 108 | 108 |
| | Effective length of die (mm) | 10 | 10 | 10 | 10 |
| | Powder feeding rate (kg/Hr) | 50 | 88 | 47 | 39 |
| | Tp (°C) | 81 | 54 | 78 | 76 |
| | Ts (°C) | 80 | 80 | 80 | 85 |
| | Tp-Ts (°C) | 1 | -26 | -2 | -9 |
| | Amount of electricity used for granulation (kwh/kg) | 0.145 | 0.047 | 0.147 | 0.124 |
| | Amount of electricity used for drying (kWh/kg) | - | 0.693 | - | 0.693 |
| | Calculated amount of $CO_2$ emission (kg($CO_2$)/kg) | 0.053 | 0.266 | 0.053 | 0.296 |
| Results of property evaluation of powder granulate | Granulability (A to E) | A | A | A | A |
| | Shell structure (with/without) | With | With | With | with |
| | Core structure | Presence of Powder | Presence of residual pow-der | Presence of residual pow-der | Presence of re-sidual powder |
| | Bulk density (kg/L) | 0.5 | 0.49 | 0.53 | 0.35 |
| | Water content (wt%) | 0.48 | 0.27 | 0.52 | 0.30 |
| | Breaking strength (kg) | 10 or higher (A) | 10 or higher (A) | 10 or higher (A) | 10 or higher (A) |

[Comparative Example A3]

The bio-based polyester powder A3 used in Example A7 was continuously introduced into a twin-screw extruder (tradename: TEX44αII, manufactured by The Japan Steel Works, Ltd., L/D = 42, cylinder temperature set at 140°C), and melt-kneaded to produce pellets of a thermoplastic resin composition.

The bio-based polyester powder A3 was quantitatively supplied through a gravimetric feeder into the hopper at the most upstream position of the extruder. The number of rotations of the screw was set at 81 rpm, the strand extruded from the die at the tip of the extruder was cooled in water at 60°C, and then pelletized into pellets about 3 mm long using a pelletizer (tradename: HSCR-150, manufactured by Isuzu Machinery Co., Ltd.), thereby obtaining melt-kneaded pellets of the bio-based polyester powder A3.

The bio-based polyester powder A3 was fed into the extruder while increasing the feeding rate in a stepwise manner, and granulation was performed at the feeding rate that provided the maximum compounding throughput per hour (i.e., the maximum feed rate at which stable production was possible without causing feed-neck formation in the extruder). As a result, the maximum ejection rate was as low as 60 kg/hr.

The melt-kneaded pellets were driedin a hot-air circulation dryer at 80°C until the water content was reduced to 0.2 wt% or less as in Example A7. Thus, melt-kneaded pellets were obtained.

In the same manner as in Example A7, the electricity consumption in each process and the calculated amount of carbon dioxide generated in the process per unit mass (per kg) of the granulate were determined. The results are shown in Table 3.

Comparison of Examples A7 and A8 with Comparative Example A3 demonstrates that the polymer powder granulate of the present embodiment significantly reduces $CO_2$ emissions in the process compared with the "melt-kneaded pellets" produced using a twin-screw extruder that employs a large heat source heater and high power consumption.

[Table 3]

| | | Ex. A7 | Ex. A8 | Comp. Ex. A3 |
|---|---|---|---|---|
| Method of granulation | | Powder granulation (semi-wet) | Powder granulation (dry) | Melt kneading |
| Apparatus | | Disc Pelleter | Disc Pelleter | 44-mm twin-screw extruder |
| Ejection (kg/hr) | | 88 | 47 | 60 |
| Consumed electricity (kWh/kg) | Extruder | 0 | 0 | 1.29 |
| | Disc Pelleter | 0.0427 | 0.1474 | 0 |
| | Pelletizer | 0 | 0 | 0.127 |
| | Dryer | 0.693 | 0 | 0.346 |
| | Total | 0.7357 | 0.1474 | 1.763 |
| Calculated amount of $CO_2$ emission in process (kg-$CO_2$/kg) | | 0.266 | 0.053 | 0.638 |
| Structure of granulate | | Core/shell | Core/shell | Strand cut pellet |
| Softening onset temperature (°C) | | 80 | 80 | 80 |
| Granulation temperature (°C) | | 54 | 78 | 140 |

(Test Example concerning the second aspect: Example B and Comparative Example B)

[Evaluation]

The crystalline polymer powder granulates (powder granulates) obtained in Example B and Comparative Example B were evaluated in the manner described below.

(1) Granulability (feasibility of granulation)

The obtained powder granulate was evaluated for its granulability in accordance with the following criteria.

A: A powder granulate having a core-shell structure was obtained, and a fused polymer was clearly observed in the shell portion.
B: A powder granulate having a core-shell structure was obtained, and a fused polymer was partially observed in the shell portion.
C: A powder granulate having an unstable core-shell structure was obtained, and a small amount of fused polymer was observed in the shell portion.
D: The granulate was unstable and readily disintegrated.
E: Granulation could not be performed because the material remained in powder form or because the die became clogged.

(2) Cross-sectional observation of granulate

A slice (thickness: 0.5 mm) was cut from the obtained crystalline polymer powder granulate using a razor blade in a direction perpendicular to the extrusion direction from the die, and the cut surface was observed with an optical microscope.

(3) Bulk density

The dried powder granulate was allowed to fall freely into a 1-liter measuring cup and leveled to the brim. The mass of the powder occupying exactly 1 liter was measured, and the bulk density of the powder granulate (unit: kg/L) was calculated.

(4) Water content

The water content (unit: % by mass) remaining in the powder granulate was measured using an infrared moisture meter (FD-660, Kett Electric Laboratory Co., Ltd.).

(5) Breaking strength

The breaking stress (breaking strength) (unit: kg) of the powder granulate was measured using a Kiya hardness tester (tradename: WPF1600-B, Shiro industry Co.). The measured value was the average of 25 granules of the powder granulate. Specifically, the powder granulate was set in the hardness tester so that its lateral surface faced the bottom, and the breaking stress was measured by crushing the lateral surface using a cylindrical pressing tool with a diameter of 5 mm. In other words, the breaking stress was measured by compressing the powder granulate in a direction perpendicular to the longitudinal (extrusion) direction.

(Example B1)

Powder granulate (without the addition of water)

A bio-based polyester powder A1, which is a type of PHA and is a copolyester of 3-hydroxybutyric acid and 3-hydroxyhexanoic acid, poly(3-hydroxybutyrate-co-3-hydroxyhexanoate) (PHBH; hexanoate content: 6%, 100% passed through a 60-mesh sieve, bulk density: 0.40 kg/L), was used as the raw material. The powder A1 was subjected to DSC measurement by heating from room temperature at a rate of 10°C/min under a nitrogen stream. The melting peak temperature $T_M$ (°C) observed at the highest temperature was 146.8°C. Unless otherwise specified, DSC measurements were performed in a nitrogen stream.

The bio-based polyester powder A1 was introduced into a disc pelletizer (tradename: Disc Pelleter F-5/11-175, manufactured by Dalton Corporation), and an approximately columnar powder granulate was prepared at the number of rotations of the roller of 108 rpm. The die plate of the disc pelletizer had a thickness of 15 mm and a hole diameter of 3 mmφ. The length of the die plate over which the powder receives compaction stress from the die wall (referred to as the effective length) was set to 10 mm. In Example B1, the granulation rate was 47 kg/hr.

The temperature of the powder granulate immediately after granulation was measured by stopping the apparatus after granulation had stabilized, inserting a thermocouple directly into the die hole, and quickly measuring the temperature of the compacted powder inside the die. The measurement was repeated five times, and the average value was designated as the temperature (Tp) of the granulate immediately after granulation.

In Example B1, the temperature (Tp) of the granulate immediately after granulation was 81°C, and an approximately columnar granulate was obtained stably. The lateral surface of the resulting powder granulate had an outer wall structure (shell structure) composed of fused polymer formed from the crystalline polymer powder component, and the interior (core portion) of the outer wall structure contained unfused powder.

The powder granulate of Example B1 was evaluated to be "A" in accordance with the above-described criteria of the granulability, and had a bulk density of 0.53 kg/L, a water content of 0.48% by mass, and a breaking strength of 10 kg or higher, and was easy to handle.

Regarding the "apparent density ratio" of the powder granulate of Example B1, the apparent density of the crystalline polymer powder granulate was 1.106 kg/L, the apparent density of melt-kneaded pellets was 1.200 kg/L, and the resulting apparent density ratio was 0.92.

The apparent density of the melt-kneaded pellets was measured using melt-kneaded pellets without air bubbles, which were prepared from the composition constituting the powder granulate of Example B1 (only A1 in this case) using a twin-screw extruder set at 140°C (as in Reference Example B1 below).

For the powder granulate of Example B1, the bulk density $\rho_1$ of the crystalline polymer powder before granulation was 0.40 (kg/L), the bulk density $\rho_2$ of the powder granulate was 0.53 (kg/L), and the $\rho_2/\rho_1$ ratio was 1.33.

Figure 11 shows the results of cooling DSC (differential scanning calorimetry) measurement of the powder granulate obtained in Example B1. Specifically, Figure 11 is a graph showing the results of the first DSC measurement of the powder granulate of Example B1 (without the addition of a crystal nucleating agent) performed under the following conditions: the temperature was increased from room temperature to the first hold temperature $T_{H1}$ (180°C in Figure 11) at a heating rate of 10°C/min, held at the first hold temperature $T_{H1}$ for 2 minutes, 5 minutes, 15 minutes, or 30 minutes, and then cooled at a rate of 10°C/min. A sample for DSC measurement was cut out from the powder granulate of Example B1.

A sample for DSC measurement was prepared by cutting a slice of approximately 5 mg from the powder granulate. The slice was taken by inserting a razor blade into the outer wall portion (shell portion) perpendicular to the longitudinal (extrusion) direction of the powder granulate.

During the heating in the DSC measurement from room temperature at a rate of 10°C/min in a nitrogen stream, the melting peak temperature $T_M$ (°C) of the crystalline polymer appearing at the highest temperature was 146.8°C.

After heating from room temperature to 180°C at 10°C/min and holding at 180°C for 2 minutes, the sample was cooled at 10°C/min. During this cooling, the recrystallization exothermic peak temperature ($Tc_2$) was observed at 91.0°C, as shown in Figure 11.

After heating from room temperature to 180°C at 10°C/min and holding at 180°C for 5 minutes, the sample was cooled at 10°C/min. During this cooling, the recrystallization exothermic peak temperature ($Tc_5$) was observed at 92.5°C, as shown in Figure 11.

After heating from room temperature to 180°C at 10°C/min and holding at 180°C for 15 minutes, the sample was cooled at 10°C/min. During this cooling, the recrystallization exothermic peak temperature ($Tc_{15}$) was observed at 92.4°C, as shown in Figure 11.

After heating from room temperature to 180°C at 10°C/min and holding at 180°C for 30 minutes, the sample was cooled at 10°C/min. During this cooling, the recrystallization exothermic peak temperature ($Tc_{30}$) was observed at 91.9°C, as shown in Figure 11.

The results on the recrystallization exothermic peak in Example B1 demonstrate that 180°C is one of the first hold temperatures $T_{H1}$ at which holding the sample leads the recrystallization exothermic peak to appear.

The DSC behaviors shown in Figure 11 represent typical behaviors caused by the melt memory effect of the crystalline polymer, which are characteristic of the powder granulate of the present embodiment.

As shown in Figure 11, the DSC measurements were performed at a predetermined hold temperature with holding times of 2, 5, 15, and 30 minutes. The recrystallization exothermic peak temperature did not shift to lower temperatures as the holding time increased. Specifically, the recrystallization exothermic peak temperature was 92.4°C when the holding time was 15 minutes, and was 91.0°C when the holding time was 2 minutes; the ratio of these values (the recrystallization exothermic peak temperature when the holding time was 15 minutes ($Tc_{15}$) / the recrystallization exothermic peak temperature when the holding time was 2 minutes ($Tc_2$)) was 1.02, which was within the range of 0.95 to 1.05.

In the present example, the DSC measurements were performed with holding times of 2, 5, 15, and 30 minutes. As the holding time condition defining the present embodiment, 15 minutes was selected as a standard holding time that sufficiently corresponds to the typical melt residence time in actual molding processing machines.

Figure 11 shows, in the bottom row, a DSC curve obtained during cooling when the powder granulate obtained in Example B1 was heated from room temperature to 200°C at 10°C/min, held at 200°C for 5 minutes, and then cooled at 10°C/min. No recrystallization exothermic peak was observed. Specifically, Figure 11 demonstrates that 200°C is one of the second hold temperatures $T_{H2}$ at which holding the sample does not lead to appearance of a recrystallization exothermic peak. It should be understood that, if no recrystallization exothermic peak is observed after a holding time of 5 minutes, such a peak would also not be observed after a holding time of 15 minutes.

The results on the recrystallization exothermic peak temperatures $Tc_2$, $Tc_5$, $Tc_{15}$, and $Tc_{30}$ shown in Figure 11 suggest that the melt memory structure is maintained without being disturbed by heat even after the powder granulate has been held at a melt temperature of 180°C for a residence time required for molding processing, indicating that the crystallization nucleating effect can likewise be maintained during actual molding processing.

(Example B2)

Powder granulate (with the addition of water)

A bio-based polyester powder A1 (the same as used in Example B1, 100 parts by mass) was introduced into an FM mixer (tradename: 5FM5C/I, manufactured by Nippon Coke & Engineering Co., Ltd., processing volume: 5 L). While rotating the stirring blades at 2,000 rpm, 20 parts by mass of tap water was continuously sprayed onto the bio-based polyester powder A1 continuously for 10 minutes to obtain a water-containing powder mixture.

The FM mixer was equipped with a combination of an upper Y1 blade and a lower S0 blade (both tradename, manufactured by Nippon Coke & Engineering Co., Ltd.), and a baffle (also referred to as a deflector) was installed in the stirring vessel.

The resulting water-containing powder was introduced into a disc pelletizer in the same manner as in Example B1, and a columnar granulate precursor was obtained.

In Example B2, a semi-wet granulation method was employed. The presence of an appropriate amount of water increased the bulk density of the powder, improved the feeding of the powder into the die hole, reduced excessive heat generation during granulation, and prevented clogging of the die. As a result of these effects, the granulation rate was improved, reaching 88 kg/hr for the granulate precursor.

In Example B2, the temperature (Tp) of the granulate precursor immediately after granulation was 54°C, and a columnar granulate precursor was obtained stably.

The obtained granulate precursor was dried using a hot-air circulation dryer (tradename: PH-402, manufactured by ESPEC Corp.) at 140°C, thereby yielding a powder granulate with a water content of 0.27 wt%.

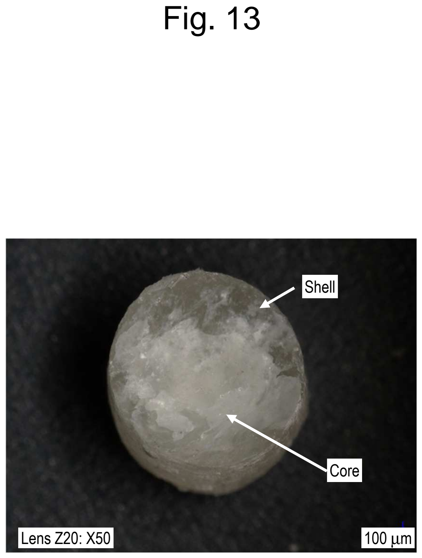

The resulting powder granulate was found to have a core-shell structure similar to that of Example B1. Figure 13 shows a photograph showing the appearance of the powder granulate of Example B2.

The powder granulate of Example B2 was evaluated to be "A" in accordance with the above-described criteria of the granulability, and had a bulk density of 0.49 kg/L, a water content of 0.27% by mass, and a breaking strength of 10.0 kg or higher, and was easy to handle.

Regarding the "apparent density ratio" of the powder granulate of Example B2, the apparent density of the crystalline polymer powder granulate was 1.087 kg/L, the apparent density of melt-kneaded pellets was 1.200 kg/L, and the resulting apparent density ratio was 0.91.

For the powder granulate of Example B2, the bulk density $\rho_1$ of the crystalline polymer powder before granulation was 0.40 (kg/L) as in Example B1, the bulk density $\rho_2$ of the powder granulate was 0.49 (kg/L), and the bulk density ratio $\rho_2/\rho_1$ was 1.23.

DSC measurements were performed in the same manner as in Example B1. As a result, the recrystallization exothermic peak temperatures $Tc_2$, $Tc_5$, $Tc_{15}$, and $Tc_{30}$ were 91.5°C, 92.1°C, 92.5°C, and 92.8°C, respectively.

The $Tc_{15}/Tc_2$ value was 1.01, which was within the range of 0.95 to 1.05. As in Example B1, this result demonstrates that the melt memory effect is stably maintained with respect to melt residence time at a melt temperature of 180°C.

(Reference Example B1)

Melt-kneaded pellets (with the addition of a crystal nucleating agent)

To 100 parts by mass of the bio-based polyester powder A1, 1 part by mass of pentaerythritol powder (tradename: Neulizer P, produced by Taisei Kayaku Co., Ltd., melting point: 260°C) as a crystal nucleating agent and 0.5 parts by mass of behenic acid amide (tradename: BNT-22, produced by Nippon Fine Chemical Co., Ltd., melting point: 110°C) as a processing aid were added and premixed in powder form. The resulting mixture was continuously introduced into a twin-screw extruder (tradename: KTZ15, produced by Technovel Corporation, the T die in Example B3 below was replaced with a 3 mm φ two-hole die, L/D = 42, cylinder temperature set at 140°C). Melt-kneading was performed at a main screw rotation speed of 80 rpm, and the extruded strands were cooled in water and cut at 60°C to obtain melt-kneaded pellets. In Reference Example B1, the granulation rate was 1.0 kg/hr.

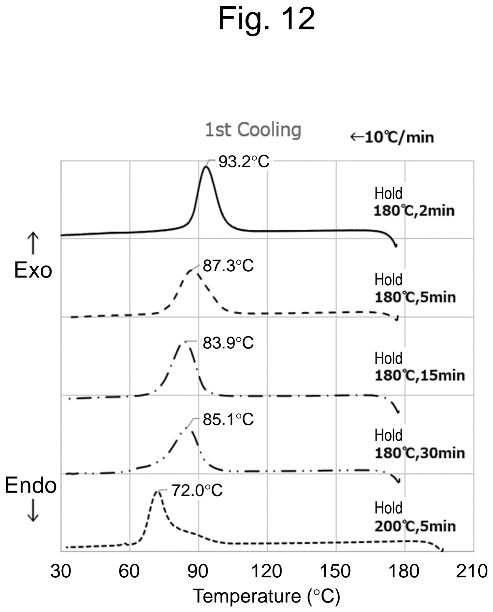

A slice (about 5 mg) was cut from the melt-kneaded pellet obtained in Reference Example B1 as a sample for DSC measurement, and the DSC measurement was performed in the same manner as in Example B1. The results of the DSC measurement are shown in Figure 12.

During the heating from room temperature at a rate of 10°C/min in the DSC measurement, the melting peak temperature TM (°C) of the crystalline polymer appearing at the highest temperature was 146.8°C, which was the same as that of the powder granulate of Example B1.

Figure 12 shows the DSC curves each obtained during cooling in the DSC measurement for the melt-kneaded pellet (containing a crystal nucleating agent) of Reference Example B1, in which the melt-kneaded pellet was heated from room temperature to 180°C at a rate of 10°C/min, held at 180°C for 2, 5, 15, or 30 minutes, and then cooled at a cooling rate of 10°C/min, as in Figure 11 (Example B1). The recrystallization exothermic peak temperatures $Tc_2$, $Tc_5$, $Tc_{15}$, and $Tc_{30}$ shown in Figure 12 were 93.2°C, 87.3°C, 83.9°C, and 85.1°C, respectively. Compared with the results shown in Figure 11 (Example B1) obtained under the same DSC measurement conditions, the recrystallization exothermic peaks were shifted to lower temperatures, indicating that the effect of the crystal nucleating agent was inferior to the crystallization nucleating effect in Figure 11 (Example B1).

Concerning the melt-kneaded pellet shown in Figure 12 (Reference Example B1), the recrystallization exothermic peak temperature $Tc_{15}$ for the holding time of 15 minutes was 83.9°C, the recrystallization exothermic peak temperature $Tc_2$ for the holding time of 2 minutes was 93.2°C, and the ratio ($Tc_{15}/Tc_2$) was 0.90, which fell outside the range of 0.95 to 1.05.

Figure 12 shows, in the bottom row, a DSC curve obtained during cooling when the melt-kneaded pellet (containing a crystal nucleating agent) of Reference Example B1 was heated from room temperature to 200°C at 10°C/min, held at 200°C for 5 minutes, and then cooled at 10°C/min. Although the recrystallization exothermic peak was observed, the peak temperature had decreased to 72°C, indicating a significant reduction in the effects of a crystal nucleating agent.

(Reference Example B2)

Melt-kneaded pellets (without the addition of a crystal nucleating agent)

Melt-kneaded pellets were produced under the same conditions as in Reference Example B1, except that pentaerythritol and behenic acid amide were not added.

The melt-kneaded pellet of Reference Example B2 was subjected to the DSC measurement in the same manner.

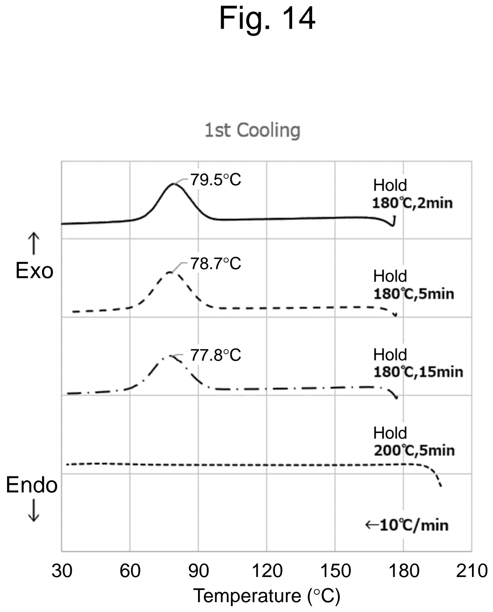

Figure 14 shows the DSC curves each obtained during cooling in the DSC measurement for the melt-kneaded pellet of Reference Example B2, in which the melt-kneaded pellet was heated from room temperature to 180 °C at a rate of 10 °C/min, held at 180 °C for 2, 5, or 15 minutes, and then cooled at a cooling rate of 10 °C/min. The recrystallization exothermic peak temperatures $Tc_2$, $Tc_5$, and $Tc_{15}$ shown in Figure 14 were 79.5°C, 78.7°C, and 77.8°C, respectively.

While the recrystallization exothermic peaks were observed in Reference Example B2, the peaks were shifted to lower temperatures compared with Example B1 (Figure 11), indicating a significant reduction in the effects of a crystal nucleating agent.

Figure 14 shows, in the bottom row, a DSC curve obtained during cooling when the melt-kneaded pellet of Reference Example B2 was heated from room temperature to 200°C at 10°C/min, held at 200°C for 5 minutes, and then cooled at 10°C/min. As shown in Figure 14, no recrystallization exothermic peak was observed under such conditions.

(Reference Example B3)

Crystalline polymer powder (without any processing)

The bio-based polyester powder A1 was subjected to the DSC measurement in the same manner as in Example B1 without performing granulation.

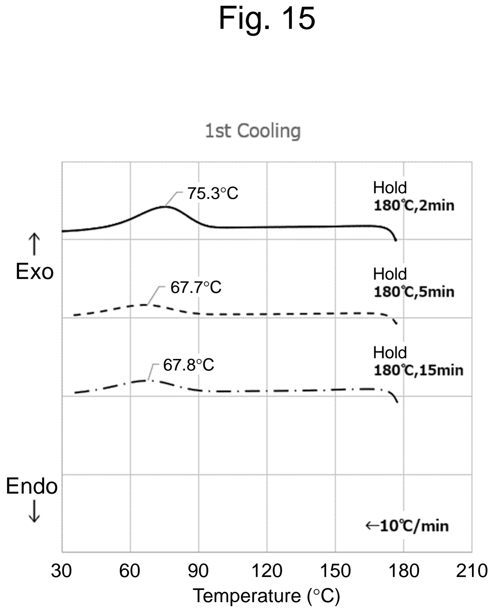

Figure 15 shows the DSC curves each obtained during cooling in the DSC measurement for the bio-based polyester powder A1 of Reference Example B3, in which the bio-based polyester powder A1 was heated from room temperature to 180°C at 10°C/min, held at 180°C for 2 minutes, 5 minutes, or 15 minutes, and then cooled at 10°C/min. The recrystallization exothermic peak temperatures $Tc_2$, $Tc_5$, and $Tc_{15}$ shown in Figure 15 were 75.3°C, 67.7°C, and 67.8°C, respectively.

While the recrystallization exothermic peaks were observed in Reference Example B3, the peaks were significantly shifted to lower temperatures and exhibited broader peak areas compared with Figure 11 (Example B1), indicating a significant reduction in the effects of a crystal nucleating agent compared with Figure 11 (Example B1). In comparison with Example B1, the powder granulate according to the present embodiment can significantly enhances the crystal nucleating effects.

Table 4 shows the results of Examples B1 and B2 and Reference Examples B1 to B3.

[Table 4-1]

| | | Unit | Ex. B1 | Ex. B2 |
|---|---|---|---|---|
| Raw material (crystalline polymer powder) | Reference | - | A1 | A1 |
| | Polymer type | - | PHBH | PHBH |
| | Addition of nucleating agent | | Not added | Not added |
| | Bulk density $\rho_1$ | kg/L | 0.40 | 0.40 |
| | Melting peak temperature $T_M$ | °C | 146.8 | 146.8 |
| Conditions for producing powder granulate | Number of rotations of roller | rpm | 108 | 108 |
| | Effective length of die | mm | 10 | 10 |
| | Addition of water | - | Not added | Added (20 parts) |
| | Tp | °C | 81 | 54 |

(continued)

| | | Unit | Ex. B1 | Ex. B2 |
|---|---|---|---|---|
| Results of property evaluation of powder granulate | Granulability | A to E | A | A |
| | Core-shell structure | with/without | with | with |
| | Granulation rate | kg/Hr | 47 | 88 |
| | Bulk density $\rho_2$ | kg/L | 0.53 | 0.49 |
| | Water content | mass% | 0.48 | 0.27 |
| | Breaking strength | kg | 10 kg or higher | 10 kg or higher |
| | Apparent density ratio | - | 0.92 | 0.91 |
| | Bulk density ratio $\rho_2/\rho_1$ | - | 1.33 | 1.23 |
| Recrystallization temperature of powder granulate (cooling measurement at 10°C/min) | (a) Hold at 180°C for 2 min, $Tc_2$ | °C | 91.0 | 91.5 |
| | (b) Hold at 180°C for 5 min, $Tc_5$ | °C | 92.5 | 92.1 |
| | (c) Hold at 180°C for 15 min, $Tc_{15}$ | °C | 92.4 | 92.5 |
| | (d) Hold at 180°C for 30 min, $Tc_{30}$ | °C | 91.9 | 92.8 |
| | (e) Hold at 200°C for 5 min | °C | Not observed | Not observed |
| | $Tc_{15}/Tc_2$ | - | 1.02 | 1.01 |

[Table 4-2]

| | | Unit | Ref. Ex. B1 | Ref. Ex. B2 | Ref. Ex. B3 |
|---|---|---|---|---|---|
| Raw material (crystalline polymer powder) | Reference | - | A1 | A1 | A1 |
| | Polymer type | - | PHBH | PHBH | PHBH |
| | Addition of nucleating agent | | Added | Not added | Not added |
| | Bulk density $\rho_1$ | kg/L | 0.40 | 0.40 | 0.40 |
| | Melting peak temperature $T_M$ | °C | 146.8 | 146.8 | 146.8 |
| Conditions for producing powder granulate | Number of rotations of roller | rpm | Melt-kneaded pellet | Melt-kneaded pellet | - |
| | Effective length of die | mm | - | - | - |
| | Addition of water | - | - | - | - |
| | Tp | °C | - | - | - |
| Results of property evaluation of powder granulate | Granulability | A to E | Melt-kneaded pellet | Melt-kneaded pellet | A1 powder |
| | Core-shell structure | with /without | without | without | - |
| | Granulation rate | kg/Hr | - | - | - |
| | Bulk density $\rho_2$ | kg/L | - | - | - |
| | Water content | mass% | - | - | - |
| | Breaking strength | kg | 10 kg or higher | 10 kg or higher | - |
| | Apparent density ratio | - | - | - | - |
| | Bulk density ratio $\rho_2/\rho_1$ | - | - | - | - |

(continued)

| | | Unit | Ref. Ex. B1 | Ref. Ex. B2 | Ref. Ex. B3 |
|---|---|---|---|---|---|
| Recrystallization temperature of powder granulate (cooling measurement at 10°C/min) | (a) Hold at 180°C for 2 min, $Tc_2$ | °C | 93.2 | 79.5 | 75.3 |
| | (b) Hold at 180°C for 5 min, $Tc_5$ | °C | 87.3 | 78.7 | 67.7 |
| | (c) Hold at 180°C for 15 min, $Tc_{15}$ | °C | 83.9 | 77.8 | 67.8 |
| | (d) Hold at 180°C for 30 min, $Tc_{30}$ | °C | 85.1 | - | - |
| | (e) Hold at 200°C for 5 min | °C | 72.0 | Not observed | Not observed |
| | $Tc_{15}/Tc_2$ | - | 0.90 | 0.98 | 0.90 |

(Example B3)

Sheet extrusion molding using powder granulate

The powder granulate obtained in Example B2 was introduced into a sheet extruder (tradename: KTZ15, manufactured by Technovel Corporation). The temperature of a cylinder and a T die were set at 140°C, and a single layer extruded sheet with a thickness of 0.5 mm and a width of 100 mm was obtained through the T die at an extrusion rate of 2 kg/hr. The roll temperature was set at 20°C and the winding rate was set at 5 m/min.
Example B3 demonstrates that sheet extrusion molding can be performed directly from the powder granulate.

(Example B4)

PLA powder granulate

Polylactic acid (PLA) (tradename: L130, produced by TotalEnergies Corbion Ltd.) was molded into dumbbell-shaped test specimens (type 1A multi-purpose test specimens) using an injection molding machine (SI-80W, manufactured by Toyo Machinery & Metal Co., Ltd., mold clamping force: 80 tons) at a cylinder temperature of 200°C and a mold temperature of 30°C (both fixed and moving sides) with a cooling time of 30 seconds. The test specimens were obtained by rapid cooling in the mold, and crystallization was not sufficiently advanced in the resulting molded articles.
The dumbbell-shaped test specimens were ground and allowed to pass through a 60-mesh sieve to prepare the polylactic acid (PLA) powder raw material (A2, bulk density: 0.60 kg/L). The polylactic acid powder was then introduced into a disc pelletizer (tradename: Disc Pelleter F-5/11-175, manufactured by Dalton Corporation) in the same manner as in Example B1 to obtain a powder granulate in a pellet form at the number of rotations of a roller of 108 rpm.
The PLA powder granulate obtained in Example B4 had a bulk density of 0.58 kg/L, a water content of 0.57% by mass, and a breaking strength of 10 kg or higher.
The bulk density $\rho_1$ of the crystalline polymer powder A2 of Example B4 before granulation was 0.60 (kg/L), the bulk density $\rho_2$ of the powder granulate was 0.58 (kg/L), and the $\rho_2/\rho_1$ ratio was 0.97.
The PLA powder granulate was subjected to DSC measurement in a nitrogen stream while heating from room temperature at a rate of 10°C/min. The melting peak temperature $T_M$ (°C) appearing at the highest temperature was 175.7°C.

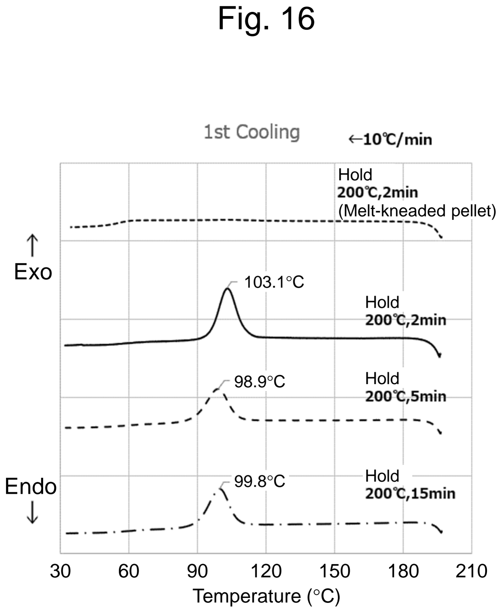

Figure 16 shows, in the second and lower rows of the graph, DSC curves each obtained during cooling of the PLA powder granulate of Example B4 in the DSC measurement in which the PLA powder granulate was heated from room temperature to 200°C at 10°C/min, held at 200°C for 2 minutes, 5 minutes, or 15 minutes, and then cooled at a rate of 10°C/min. The recrystallization exothermic peak temperatures $Tc_2$, $Tc_5$, and $Tc_{15}$, shown in Figure 16 were 103.1°C, 98.9°C, and 99.8°C, respectively, indicating the presence of a crystal nucleating function due to the melt memory effects.
In addition, Example B4 exhibits the recrystallization exothermic peak temperature $Tc_{15}$ of 99.8°C for the holding time of 15 minutes, the recrystallization exothermic peak temperature $Tc_2$ of 103.1°C for the holding time of 2 minutes, and the ratio ($Tc_{15}/Tc_2$) was 0.97, which fell within the range of 0.95 to 1.05. This indicates that the PLA powder granulate of Example B4 exhibits excellent retention of crystal nucleating effects with respect to holding time.
Figure 16 shows, in the top row, the result of DSC measurement of a sample cut from a commercially available PLA melt-kneaded pellet (tradename: L130) (Reference Example B4). Specifically, Figure 16 shows, in the top row, a DSC curve obtained during cooling in the DSC measurement for the commercially available PLA melt-kneaded pellet, in which the sample was heated from room temperature to 200°C at 10°C/min, held at 200°C for 2 minutes, and then cooled at 10°C/min. In the uppermost row in Figure 16, no recrystallization exothermic peak was observed, demonstrating that the commercially available PLA melted pellets have an extremely low rate of recrystallization. Comparison between Example B4 and Reference Example B4 demonstrates that the powder granulate of the present embodiment can significantly enhances the crystal nucleating effects.

Table 5 shows the results of Example B4 and of Reference Example B4.

[Table 5]

| | | Unit | Ex. B4 | Ref. Ex. B4 |
|---|---|---|---|---|
| Raw material (crystalline polymer powder) | Reference | - | A2 | Commercial pellet |
| | Polymer type | - | PLA | PLA |
| | Addition of nucleating agent | - | Not added | Not added |
| | Bulk density $\rho_1$ | kg/L | 0.60 | - |
| | Melting peak temperature, $T_M$ | °C | 175.7 | 175.2 |
| Conditions for producing powder granulate and physical properties thereof | Number of rotations of roller | rpm | 108 | Melt-kneaded pellet |
| | Effective length of die | mm | 10 | - |
| | Addition of water | - | Not added | - |
| | Breaking strength | kg | 10 kg or higher | - |
| | Water content | mass% | 0.57 | - |
| | Bulk density $\rho_2$ | kg/L | 0.58 | - |
| | Apparent density ratio | - | 0.90 | - |
| | Bulk density ratio $\rho_2/\rho_1$ | - | 0.97 | - |
| Recrystallization temperature of powder granulate (cooling measurement at 10°C/min) | Hold at 200°C for 2 min, $Tc_2$ | °C | 103.1 | Not observed |
| | Hold at 200°C for 5 min, $Tc_5$ | °C | 98.9 | Not observed |
| | Hold at 200°C for 15 min, $Tc_{15}$ | °C | 99.8 | Not observed |
| | $Tc_{15}/Tc_2$ | - | 0.97 | - |

Based on the results of Example B4, it is inferred that the granulate formed from the powder obtained by grinding the PLA injection-molded product contained oriented crystalline material and exhibited the melt memory effect.

The upper limits and/or the lower limits of the numerical ranges described herein can be combined in any manner to define a preferred range. For example, a preferred range can be defined by any combination of the upper limit and the lower limit of the numerical ranges, by any combination of the upper limits of the numerical ranges, or by any combination of the lower limits of the numerical ranges.

While the present embodiment has been described in detail above, the specific constitution is not limited to the embodiment. Design modifications within the scope of the present disclosure are included in the scope of the present disclosure.

All publications, patents, and patent applications cited herein are incorporated herein by reference in their entirety.

**Claims**

1.    A powder granulate containing thermoplastic resin powder, wherein the powder granulate comprises an outer wall portion in which at least part of the thermoplastic resin powder located in the outermost region of the powder granulate is fused, and which accommodates compacted thermoplastic resin powder.

2.    The powder granulate according to claim 1, wherein at least part of the compacted thermoplastic resin powder accommodated in the outer wall portion comprises the thermoplastic resin powder in an unfused compacted powder form.

3. The powder granulate according to claim 1, wherein at least part of the compacted thermoplastic resin powder accommodated in the outer wall portion comprises the thermoplastic resin powder in a partially fused form.

4. The powder granulate according to claim 1, wherein the powder granulate has an approximately columnar or approximately prismatic shape.

5. The powder granulate according to claim 4, wherein the outer wall portion is located on the lateral surface of the powder granulate.

6. The powder granulate according to claim 5, wherein the powder granulate has a breaking strength of 2.0 kg or higher.

7. The powder granulate according to claim 1, wherein the powder granulate is a compaction granulate.

8. The powder granulate according to claim 1, wherein the thermoplastic resin powder contains thermoplastic resin having a softening onset temperature of 50°C to 150°C.

9. The powder granulate according to claim 1, wherein the thermoplastic resin powder contains thermoplastic resin having a softening onset temperature of 60°C to 90°C.

10. The powder granulate according to claim 1, wherein the thermoplastic resin powder contains at least one resin selected from the group consisting of acrylic-based resin, methacrylic-based resin, polyhydroxyalkanoate (PHA)-based resin, polyolefin-based resin, polyamide-based resin, polyacetal-based resin, polyphenylene ether (PPE)-based resin, polyphenylene sulfide (PPS)-based resin, polyetheretherketone (PEEK)-based resin, polyimide (PI)-based resin, polyamide imide (PAI)-based resin, polyester-based resin, polycarbonate (PC)-based resin, polystyrene-based resin, polyketone-based resin, liquid crystal polymer (LCP), and core-shell polymer.

11. The powder granulate according to claim 1, wherein the thermoplastic resin powder contains PHA-based resin.

12. A method for producing the powder granulate according to any one of claims 1 to 11, comprising:

a compaction granulation step of granulating thermoplastic resin powder by a compaction granulation method comprising extruding the thermoplastic resin powder through a die hole,
wherein the compaction granulation step is performed under conditions that the temperature (Tp, °C) of the granulate immediately after granulation and the softening onset temperature (Ts, °C) of the thermoplastic resin powder satisfy Formula (1):

$$\text{Formula (1): Ts} - 30 \leq \text{Tp} \leq \text{Ts} + 10.$$

13. The method according to claim 12, wherein the temperature of the die is controlled, so that the temperature (Tp, °C) of the granulate immediately after granulation and the softening onset temperature (Ts, °C) of the thermoplastic resin powder satisfy Formula (1).

14. The method according to claim 12, wherein the outer wall portion is formed by melting at least part of the thermoplastic resin powder at a surface in contact with a wall surface of the die hole, due to frictional heat or heat transfer from the wall surface.

15. The method according to claim 14, wherein the compaction granulation step is performed using a disc pelletizer-type compaction granulator.

16. Use of the powder granulate according to any one of claims 1 to 11 as a raw material for thermoplastic resin compounding or a molding material.

# Fig. 1

# Fig. 2

# Fig. 3

Softening onset temperature; 80°C

6.725 min
90.6°C
-4.40 mW

Bio-based polyester powder A2
(heating condition: 10°C /min)

10.69 min
130.4°C
-7.13 mW

12.30 min
146.6°C
-9.69 mW

DSC mW

-5.00

-10.00

40.0   60.0   80.0   100.0   120.0   140.0   160.0   180.0

Temp °C

# Fig. 4

# Fig. 5

Fig. 6

# Fig. 7

# Fig. 8

# Fig. 9

Shell

Core

Lens Z20: X50

100 μm

# Fig. 10

# Fig. 11

# Fig. 12

# Fig. 13

Fig. 14

# Fig. 15

# Fig. 16

## INTERNATIONAL SEARCH REPORT

| International application No. |
| --- |
| **PCT/JP2024/014622** |

| A. | CLASSIFICATION OF SUBJECT MATTER |
| --- | --- |

*B29B 9/08*(2006.01)i; *B29B 9/12*(2006.01)i; *C08J 3/12*(2006.01)i
FI: B29B9/08; C08J3/12 CEZ; B29B9/12; C08J3/12 Z CER

According to International Patent Classification (IPC) or to both national classification and IPC

| B. | FIELDS SEARCHED |
| --- | --- |

Minimum documentation searched (classification system followed by classification symbols)

B29B9/08; B29B9/12; C08J3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-172026 A (KYORAKU CO., LTD.) 01 November 2021 (2021-11-01) paragraphs [0015]-[0024], fig. 2 | 1-2, 4-11, 16 |
| A | paragraphs [0015]-[0024], fig. 2 | 3, 12-15 |
| A | JP 7-80833 A (ASAHI CHEM. IND. CO., LTD.) 28 March 1995 (1995-03-28) entire text, all drawings | 1-16 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/014622**

| Patent document cited in search report | | | Publication date (day/month/year) | Patent family member(s) | Publication date (day/month/year) |
|---|---|---|---|---|---|
| JP | 2021-172026 | A | 01 November 2021 | (Family: none) | |
| JP | 7-80833 | A | 28 March 1995 | (Family: none) | |

Form PCT/ISA/210 (patent family annex) (July 2022)

**REFERENCES CITED IN THE DESCRIPTION**

**Patent documents cited in the description**

- WO 2014020838 A
- JP 2023536152 A

- JP 2023080938 A
- JP 2023173896 A

**Non-patent literature cited in the description**

- Greenhouse Gas Emissions Calculation, Reporting, and Disclosure System. A0272 Basic Emission Factor for Actual Emissions of Kansai Electric Power Company in fiscal year 2020. the Ministry of the Environment, 07 January 2022